# EUROPEAN PATENT APPLICATION

(11) **EP 3 968 144 A1**
(43) Date of publication of application: **16.03.2022**
(21) Application number: 20835325.0
(22) Date of filing: 29.06.2020
(51) Int. Cl.: G06F 3/16

(54) **VOICE CONTROL METHOD AND RELATED APPARATUS**

(30) Priority: 29.06.2019 CN 201910581559
(71) Applicant: Huawei Technologies Co., Ltd., Longgang District Shenzhen, Guangdong 518129 (CN)
(72) Inventor: ZHAO, Yuxi, Shenzhen, Guangdong 518129 (CN); ZHANG, Wen, Shenzhen, Guangdong 518129 (CN)
(74) Representative: Maiwald Patent- und Rechtsanwaltsgesellschaft mbH
(86) International application number: PCT/CN2020/098707
(87) International publication number: WO 2021/000814

(57) **Abstract**

A voice control method is provided, including: when an electronic device is in a screen-locked state, detecting a first operation (S1501); in response to the first operation, triggering authentication on a user, and triggering a voice recognition application to detect a voice instruction (S1502); and when the voice recognition application on the electronic device detects the voice instruction and the authentication succeeds, unlocking a screen and performing an operation corresponding to the voice instruction (S1503). In this way, an operation of the user triggers both authentication on the user and voice instruction detection, and when the authentication succeeds and the voice instruction is detected, the operation corresponding to the voice instruction is performed. This simplifies operation steps for voice control over the electronic device by the user, and reduces operation time of the user.

## Description

This application claims priority to Chinese Patent Application No. 201910581559.0, filed with the China National Intellectual Property Administration on June 29, 2019, and entitled "VOICE CONTROL METHOD AND RELATED APPARATUS", which is incorporated herein by reference in its entirety.

### TECHNICAL FIELD

This application relates to the field of terminal technologies, and in particular, to a voice control method and a related apparatus.

### BACKGROUND

Currently, when an electronic device (such as a mobile phone or a tablet computer) is in a screen-locked state, if a user needs to perform an operation on the electronic device, the user needs to first unlock the electronic device to enter a home screen, and then perform the corresponding operation.

For example, when the user needs to perform payment such as WeChat Pay on the electronic device, and the electronic device is in the screen-locked state, the user needs to first unlock the electronic device to enter the home screen. Then, the user needs to find a WeChat icon from the home screen, and tap the WeChat icon, so that the electronic device displays a user interface of WeChat. The user further needs to perform an operation on a corresponding virtual button in the user interface of WeChat, so that the electronic device displays an interface of a QR code for a Money function of WeChat, and the user can make payment to a merchant.

It can be learned from the foregoing description that, in the foregoing conventional manner, when the user uses a function of the electronic device, such as the WeChat Pay, the user needs to perform two or more steps. This is relatively cumbersome and causes poor user experience.

### SUMMARY

This application provides a voice control method and a related apparatus. When an electronic device is in a screen-locked state, an operation of a user triggers both authentication on the user and voice instruction detection. When the authentication succeeds and a voice instruction is detected, an operation corresponding to the voice instruction is performed. This simplifies operation steps for voice control over the electronic device by the user, and reduces operation time of the user.

According to a first aspect, this application provides a voice control method, including: First, when an electronic device is in a screen-locked state, the electronic device detects a first operation; then, in response to the first operation, the electronic device triggers authentication on a user, and triggers a voice recognition application to detect a voice instruction; and then, when the voice recognition application on the electronic device detects the voice instruction and the authentication succeeds, the electronic device unlocks a screen and performs an operation corresponding to the voice instruction.

According to the voice control method provided in this application, when the electronic device is in the screen-locked state, in response to the received user operation, the electronic device can perform identity authentication on the user, and trigger the voice recognition application to detect the voice instruction entered by the user. After the electronic device unlocks the screen and the voice recognition application detects the voice instruction, the electronic device can securely execute the detected voice instruction. In this way, when the electronic device is in the screen-locked state, by using an operation, the user may trigger authentication unlock and trigger the voice recognition application to detect the voice instruction, so as to control a function or an application on the electronic device. This simplifies operation steps for voice control over the electronic device by the user, and reduces operation time of the user.

In a possible implementation, that in response to the first operation, the electronic device triggers authentication on a user, and triggers a voice recognition application to detect a voice instruction specifically includes: In response to the first operation, the electronic device simultaneously triggers the authentication on the user and triggers the voice recognition application to detect the voice instruction. For example, an unlock instruction of the electronic device may simultaneously trigger authentication unlock on the electronic device and trigger a voice instruction detection function of the voice recognition application.

In a possible implementation, that in response to the first operation, the electronic device triggers authentication on a user, and triggers a voice recognition application to detect a voice instruction specifically includes: In response to the first operation, the electronic device triggers the authentication on the user, and when detecting that the authentication on the user is triggered, the electronic device triggers the voice recognition application to detect the voice instruction.

In a possible implementation, that in response to the first operation, the electronic device triggers authentication on a user, and triggers a voice recognition application to detect a voice instruction specifically includes: In response to the first operation, the electronic device triggers the authentication on the user; when the authentication succeeds, the electronic device triggers the voice recognition application to detect the voice instruction; when the authentication succeeds, the electronic device unlocks the screen; and after the electronic device unlocks the screen, when the voice recognition application detects the voice instruction, the electronic device performs the operation corresponding to the voice instruction. For example, an unlock success instruction of the electronic device, regardless of a fingerprint unlock instruction, a face unlock instruction, or the like, may directly trigger a voice instruction detection function of the voice recognition application, or when the electronic device displays an unlock screen, a voice instruction detection function of the voice recognition application may be directly triggered.

In a possible implementation, when no voice instruction is detected within specified time after the electronic device triggers the voice recognition application to detect the voice instruction, the electronic device closes the voice recognition application. In this way, when the user does not need to control the electronic device via voice, the voice recognition application can be closed in time, and this reduces power consumption.

In a possible implementation, when the electronic device fails in the authentication on the user, the electronic device outputs a first prompt, to prompt the user to trigger the electronic device to perform authentication on the user again. In this way, that when the authentication fails, the electronic device may prompt to perform the authentication on the user again means that authentication may be performed again when the user enters incorrect authentication information.

In a possible implementation, the first operation includes a lifting operation. That the electronic device triggers authentication on a user specifically includes: The electronic device triggers face authentication on the user. In response to the lifting operation, the electronic device triggers the face authentication on the user, and triggers the voice recognition application to detect the voice instruction. In this way, when the electronic device is in the screen-locked state, the user does not need to speak a voice wake-up word. When the user lifts the electronic device to trigger face unlock, the user directly speaks the voice instruction to control a function or an application on the electronic device. This simplifies operation steps for voice control over the electronic device by the user, and reduces operation time of the user.

In a possible implementation, the first operation includes an operation used to trigger displaying of a fingerprint recognition icon. That the electronic device triggers authentication on a user specifically includes: The electronic device triggers fingerprint authentication on the user. In response to the operation used to trigger displaying of a fingerprint recognition icon, the electronic device triggers the fingerprint authentication on the user, and triggers the voice recognition application to detect the voice instruction. In this way, in the screen-locked state, the electronic device does not need to detect a voice wake-up word spoken by the user. When the user triggers fingerprint unlock, the voice recognition application is directly triggered to detect the voice instruction. This simplifies operation steps for voice control over a function or an application on the electronic device by the user, and reduces operation time of the user.

In a possible implementation, the first operation includes an operation used to trigger displaying of a password unlock interface. That the electronic device triggers authentication on a user specifically includes: The electronic device triggers password authentication on the user. In response to the operation used to trigger displaying of a password unlock interface, the electronic device triggers the password authentication on the user, and triggers the voice recognition application to detect the voice instruction. In this way, in the screen-locked state, the electronic device does not need to detect a voice wake-up word. After the password unlock interface is displayed, the voice recognition application is directly triggered to detect the voice instruction. This simplifies operation steps for voice control over a function or an application on the electronic device by the user, and reduces operation time of the user.

In a possible implementation, the first operation includes a wake-up voice including a preset wake-up word. In response to detecting the wake-up voice including the preset wake-up word, the electronic device triggers the authentication on the user, and triggers the voice recognition application to detect the voice instruction. In this way, in the screen-locked state, only by detecting the wake-up voice, the electronic device may simultaneously trigger the voice recognition application to detect the voice instruction entered by the user, and trigger the authentication (for example, face authentication, fingerprint authentication, and password authentication) on the user. After the authentication succeeds and the voice instruction is detected, the electronic device may perform the operation corresponding to the voice instruction. This simplifies operation steps for voice control over a function or an application on the electronic device by the user, and reduces operation time of the user.

In a possible implementation, that the electronic device triggers the authentication on the user specifically includes: The electronic device triggers face authentication on the user; and/or the electronic device triggers fingerprint authentication on the user; and/or the electronic device triggers password authentication on the user.

In this application, the electronic device may start or close the voice recognition application in the background, so that the user is unaware of the operation, and user experience is improved.

According to a second aspect, this application provides a voice control method, including: First, when an electronic device is in a screen-locked state, the electronic device collects a voice signal of a user. The voice signal includes a wake-up word, the wake-up word corresponds to a voice instruction, and the voice instruction is used to request the electronic device to perform an operation corresponding to the voice instruction. When detecting the wake-up word from the voice signal, the electronic device triggers starting of a voice recognition application, and triggers authentication on the user. After the authentication on the user succeeds, the voice recognition application of the electronic device performs the operation corresponding to the voice instruction.

According to the voice control method provided in this application, in the screen-locked state, when the electronic device receives the voice signal that includes the wake-up word and that is also the voice instruction, by using the wake-up word in the voice signal, the electronic device simultaneously triggers the voice recognition application to recognize the voice instruction and triggers the authentication on the user, and executes the voice instruction after the authentication succeeds. This simplifies operation steps for voice control over the electronic device by the user, and reduces operation time of the user.

In a possible implementation, when the electronic device fails in the authentication, the electronic device outputs a first prompt, to prompt the user to trigger the electronic device to perform authentication on the user again. In this way, that when the authentication fails, the electronic device may prompt to perform the authentication on the user again means that authentication may be performed again when the user enters incorrect authentication information.

In a possible implementation, that the electronic device triggers authentication on the user specifically includes: The electronic device triggers face authentication on the user; and/or the electronic device triggers fingerprint authentication on the user; and/or the electronic device triggers password authentication on the user.

According to a third aspect, this application provides an electronic device, including one or more processors and one or more memories. The one or more memories are coupled to the one or more processors. The one or more memories are configured to store computer program code, and the computer program code includes computer instructions. When the one or more processors execute the computer instructions, a communications apparatus is enabled to perform the voice communications method according to any one of the possible implementations of the foregoing aspects.

According to a fourth aspect, an embodiment of this application provides a computer storage medium, including computer instructions. When the computer instructions are run on an electronic device, a communications apparatus is enabled to perform the voice communications method according to any one of the possible implementations of the foregoing aspects.

According to a fifth aspect, an embodiment of this application provides a computer program product. When the computer program product is run on a computer, the computer is enabled to perform the voice communications method according to any one of the possible implementations of the foregoing aspects.

According to a sixth aspect, this application provides an electronic device, including an unlock operation detection module, an unlock detection module, a voice recognition module, and a voice instruction execution module. The unlock operation detection module is configured to detect an operation that is performed by a user to trigger authentication unlock (such as face authentication unlock, fingerprint authentication unlock, and password authentication unlock). The unlock detection module is configured to perform authentication unlock on the user in response to the operation that is performed by a user to trigger authentication unlock. The voice instruction recognition module is configured to: in response to the operation that is performed by a user to trigger authentication unlock, detect a voice instruction entered by the user. The voice instruction execution module is configured to: when the unlock succeeds and the voice instruction is detected, perform an operation corresponding to the voice instruction.

According to a seventh aspect, this application provides an electronic device, including a wake-up word detection module, an unlock detection module, a voice instruction recognition module, and a voice instruction execution module. The wake-up word detection module is configured to detect a wake-up word entered by a user. The unlock detection module is configured to perform authentication unlock on the user when the wake-up word detection module detects the wake-up word entered by the user. The voice instruction recognition module is configured to: when the wake-up word detection module detects the wake-up word entered by the user, detect a voice instruction entered by the user. The voice instruction execution module may be configured to: when the unlock succeeds and the voice instruction is detected, perform an operation corresponding to the voice instruction.

According to an eighth aspect, this application provides an electronic device, including: a voice hot word detection module, an unlock detection module, and a hot word instruction execution module. The voice hot word detection module is configured to detect a voice hot word (namely, a wake-up word) entered by a user, where the voice hot word corresponds to a voice instruction. The unlock detection module is configured to perform authentication unlock on the user when the voice hot word detection module detects the voice hot word entered by the user. The hot word instruction execution module is configured to: when the authentication unlock succeeds, execute the voice instruction corresponding to the voice hot word.

### BRIEF DESCRIPTION OF DRAWINGS

FIG. 1 is a schematic diagram of a structure of an electronic device according to an embodiment of this application;
FIG. 2A to FIG. 2D are schematic diagrams of a group of interfaces in the conventional technology;
FIG. 3A to FIG. 3D are schematic diagrams of a group of interfaces according to an embodiment of this application;
FIG. 4A to FIG. 4C are schematic diagrams of another group of interfaces according to an embodiment of this application;
FIG. 5A to FIG. 5D are schematic diagrams of another group of interfaces according to an embodiment of this application;
FIG. 6A to FIG. 6C are schematic diagrams of another group of interfaces according to an embodiment of this application;
FIG. 7A to FIG. 7E are schematic diagrams of another group of interfaces according to an embodiment of this application;
FIG. 8A to FIG. 8E are schematic diagrams of a group of interfaces according to an embodiment of this application;
FIG. 9A to FIG. 9D are schematic diagrams of a group of interfaces according to an embodiment of this application;
FIG. 10A to FIG. 10D are schematic diagrams of a group of interfaces according to an embodiment of this application;
FIG. 11A to FIG. 11D are schematic diagrams of a group of interfaces according to an embodiment of this application;
FIG. 12A to FIG. 12D are schematic diagrams of another group of interfaces according to an embodiment of this application;
FIG. 13A to FIG. 13C are schematic diagrams of another group of interfaces according to an embodiment of this application;
FIG. 14A to FIG. 14D are schematic diagrams of another group of interfaces according to an embodiment of this application;
FIG. 15 is a schematic flowchart of a voice control method according to an embodiment of this application;
FIG. 16 is a schematic diagram of a structure of an electronic device according to another embodiment of this application;
FIG. 17 is a schematic diagram of a structure of an electronic device according to another embodiment of this application; and
FIG. 18 is a schematic diagram of a structure of an electronic device according to another embodiment of this application.

### DESCRIPTION OF EMBODIMENTS

The following clearly describes technical solutions in embodiments of this application in detail with reference to accompanying drawings. In the descriptions of the embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of the embodiments of this application, "a plurality of" means two or more.

The following terms "first" and "second" are merely intended for description, and shall not be understood as an indication or implication of relative importance or implicit indication of a quantity of indicated technical features. Therefore, a feature limited by "first" or "second" may explicitly or implicitly include one or more features. In the descriptions of the embodiments of this application, unless otherwise specified, "a plurality of' means two or more.

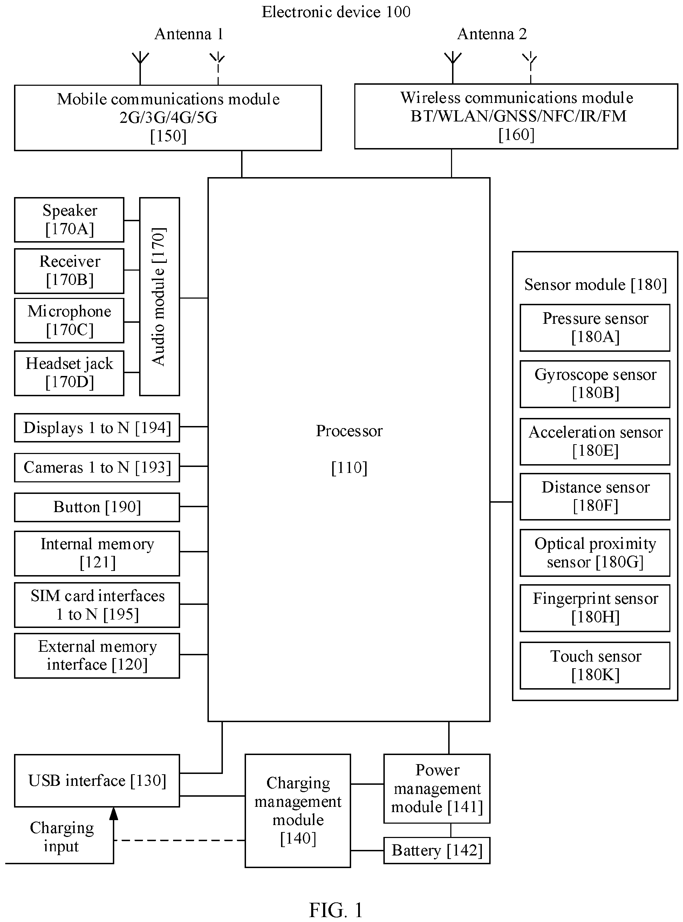

FIG. 1 is a schematic diagram of a structure of an electronic device 100.

The following uses the electronic device 100 as an example to specifically describe this embodiment. It should be understood that the electronic device 100 shown in FIG. 1 is merely an example, and the electronic device 100 may have more or fewer components than those shown in FIG. 1, or may combine two or more components, or may have different component configurations. Various components shown in the figure may be implemented in hardware, software, or a combination of hardware and software that includes one or more signal processing and/or application-specific integrated circuits.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a camera 193, a display 194, a subscriber identification module (subscriber identification module, SIM) card interface 195, and the like. The sensor module 180 may include a pressure sensor 180A, a gyroscope sensor 180B, an acceleration sensor 180E, a proximity sensor 180G, a fingerprint sensor 180H, a touch sensor 180K, and the like.

It may be understood that the structure shown in the embodiments of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (Neural-network Processing Unit, NPU). Different processing units may be separate devices, or may be integrated into one or more processors.

In some embodiments of this application, the processor 110 may include a voice wake-up module and a voice instruction recognition module. In an optional implementation, the voice wake-up module and the voice instruction recognition module may be integrated in different processor chips, and are executed by different chips. For example, the voice wake-up module may be integrated in a coprocessor or a DSP chip with relatively low power consumption, and the voice instruction recognition module may be integrated in an AP, an NPU, or another chip. In this way, after recognizing a preset voice wake-up word, the voice wake-up module may wake up a chip in which the voice instruction recognition module is located to trigger a voice instruction recognition function, so as to reduce power consumption. In another optional implementation, the voice wake-up module and the voice instruction recognition module may alternatively be integrated in a same processor chip, and the same chip implements related functions of the voice wake-up module and the voice instruction recognition module. For example, both the voice wake-up module and the voice instruction recognition module may be integrated in an AP chip.

In some embodiments of this application, the voice wake-up module and the voice instruction recognition module may be function modules of different applications. For example, the voice wake-up module may be a function module of a first application, the voice instruction recognition module is function module of a second application, and the first application and the second application are different applications. Optionally, the voice wake-up module and the voice instruction recognition module may alternatively be function modules of a same application.

The processor 110 may further include a voice instruction execution module. That is, after recognizing a voice instruction, the voice instruction execution module performs an operation corresponding to the voice instruction. For example, a voice assistant application is an application including a voice instruction recognition function. After recognizing the voice instruction, the voice assistant application may directly perform the operation corresponding to the voice instruction, or if the operation corresponding to the voice instruction involves a third application, the voice assistant application invokes the third application to perform the corresponding operation.

The processor 110 may further perform authentication on a user and unlock a screen. For example, when the electronic device detects a lifting operation, the processor 110 may trigger authentication on a user, for example, enabling of face detection and recognition. In some embodiments of the present invention, an operation of the user may trigger the electronic device to perform authentication on the user and trigger a voice recognition application to detect a voice instruction. Triggering the voice recognition application to detect the voice instruction is activating a voice instruction recognition function, for example, starting the voice recognition application (the application is started, so that the voice instruction of the user can be recognized without a wake-up word), or activating the voice instruction recognition function when the voice recognition application is started, and in this case, no wake-up word is required.

In some embodiments of this application, the voice wake-up word may be a hot word. The hot word corresponds to a voice instruction. The processor 110 may include a hot word detection module and a voice instruction execution module. In an optional implementation, the hot word detection module and the voice instruction execution module may be integrated in different processor chips, and are executed by different chips. For example, the hot word detection module may be integrated in a coprocessor or a DSP chip or another chip with relatively low power consumption, and the voice instruction execution module may be integrated in an AP. In this way, after the hot word detection module detects the hot word and detects the voice instruction corresponding to the hot word, the voice instruction execution module may be woken up to execute the voice instruction corresponding to the hot word. In another optional implementation, the hot word detection module and the voice instruction execution module may alternatively be integrated in a same processor chip, and the same chip executes related functions. For example, both the hot word detection module and the voice instruction execution module may be integrated in an AP chip.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instruction or the data again, the processor 110 may directly invoke the instruction or the data from the memory. This avoids repeated access and reduces waiting time of the processor 110, thereby improving system efficiency.

The charging management module 140 is configured to receive charging input from a charger. The charger may be a wireless charger, or may be a wired charger. The charging management module 140 supplies power to the electronic device by using the power management module 141 while charging the battery 142.

The power management module 141 is configured to connect to the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communications module 160, and the like.

A wireless communication function of the electronic device 100 may be implemented by using the antenna 1, the antenna 2, the mobile communications module 150, the wireless communications module 160, the modem processor, the baseband processor, and the like. The antenna 1 and the antenna 2 are configured to transmit and receive electromagnetic wave signals. Each antenna in the electronic device 100 may be configured to cover one or more communications frequency bands. Different antennas may be further multiplexed, to improve antenna utilization.

The mobile communications module 150 can provide a wireless communication solution that includes 2G/3G/4G/5G or the like and that is applied to the electronic device 100. In some embodiments, at least some function modules of the mobile communications module 150 and at least some modules of the processor 110 may be disposed in a same device.

The wireless communications module 160 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100.

The electronic device 100 implements a display function through the GPU, the display 194, the application processor, and the like. The GPU is a microprocessor for image processing, and is connected to the display 194 and the application processor. The GPU is configured to perform mathematical and geometric calculation, and is used for graphics rendering. The processor 110 may include one or more GPUs that execute a program instruction to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device 100 may include one or N displays 194, where N is a positive integer greater than 1.

The electronic device 100 may implement the photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image.

The camera 193 is configured to capture a static image or a video. An optical image of an object is generated through the lens, and is projected onto the photosensitive element. The photosensitive element may be a charge-coupled device (charge coupled device, CCD) or a complementary metal-oxide-semiconductor (complementary metal-oxide-semiconductor, CMOS) photoelectric transistor. The photosensitive element converts the optical signal into the electrical signal, and then transmits the electrical signal to the ISP to convert the electrical signal into a digital image signal. The ISP outputs the digital image signal to the DSP for processing. The DSP converts the digital image signal into a standard image signal in an RGB format, a YUV format, or the like. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy and the like.

The video codec is configured to compress or decompress a digital video. The electronic device 100 may support one or more video codecs. Therefore, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information with reference to a structure of a biological neural network, for example, with reference to a transfer mode between human brain neurons, and may further continuously perform self-learning. The NPU can implement applications such as intelligent cognition of the electronic device 100, for example, image recognition, face recognition, voice recognition, and text understanding.

The internal memory 121 may be configured to store computer-executable program code. The executable program code includes instructions. The processor 110 runs the instructions stored in the internal memory 121, to implement various function applications and data processing of the electronic device 100.

The electronic device 100 may implement audio functions, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some function modules of the audio module 170 are disposed in the processor 110.

The speaker 170A, also referred to as a "horn", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or audio information is listened to by using the electronic device 100, the receiver 170B may be put close to a human ear to listen to a voice.

The microphone 170C, also referred to as a "mike" or a "microphone", is configured to convert a sound signal into an electrical signal. When making a call or sending voice information, a user may make a sound by moving a human mouth close to the microphone 170C to enter a sound signal to the microphone 170C. At least one microphone 170C may be disposed in the electronic device 100. In some other embodiments, two microphones 170C may be disposed in the electronic device 100, to collect a sound signal and implement a noise reduction function.

The pressure sensor 180A is configured to sense a pressure signal, and can convert the pressure signal into an electrical signal. In some embodiments, the pressure sensor 180A may be disposed on the display 194. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A.

The gyroscope sensor 180B may be configured to determine a moving posture of the electronic device 100. In some embodiments, an angular velocity of the electronic device 100 around three axes (namely, axes x, y, and z) may be determined by using the gyroscope sensor 180B.

The acceleration sensor 180E may detect accelerations in various directions (usually on three axes) of the electronic device 100, and may detect magnitude and a direction of gravity when the electronic device 100 is still. The acceleration sensor may be further configured to identify a posture of the electronic device, and is applied to an application such as switching between landscape mode and portrait mode or a pedometer.

The fingerprint sensor 180H is configured to collect a fingerprint. The electronic device 100 may use a feature of the collected fingerprint to implement fingerprint unlock, application lock access, fingerprint photographing, fingerprint call answering, and the like.

The touch sensor 180K is also referred to as a "touch panel". The touch sensor 180K may be disposed in the display 194, and the touch sensor 180K and the display 194 constitute a touchscreen, which is also referred to as a "touch control screen". The touch sensor 180K is configured to detect a touch operation performed on or near the touch sensor 180K. In some other embodiments, the touch sensor 180K may also be disposed on a surface of the electronic device 100 at a location different from that of the display 194.

The button 190 includes a power button, a volume button, and the like. The button 190 may be a mechanical button, or or may be a touch button. The electronic device 100 may receive a button input, and generate a button signal input related to a user setting and function control of the electronic device 100.

The SIM card interface 195 is configured to connect to a SIM card. The SIM card may be inserted into the SIM card interface 195 or detached from the SIM card interface 195, to implement contact with or separation from the electronic device 100.

Currently, an electronic device has a voice wake-up function. When the electronic device is in a screen-locked state, a voice recognition application (for example, a voice assistant application that may be used to: detect a voice instruction entered by a user, and after detecting the voice instruction, perform an operation corresponding to the voice instruction) on the electronic device is closed, and cannot detect a voice instruction in a voice entered by the user. The user needs to enter a wake-up word via voice, for example, "Xiaoyi Xiaoyi". After detecting the preset wake-up word, a wake-up module on the electronic device 100 may start the voice recognition application on the electronic device. After the voice recognition application on the electronic device is woken up and started by the wake-up module, the user may enter a voice signal (for example, "Open a payment interface of WeChat"). After the electronic device receives the voice signal (for example, "Open a payment interface of WeChat") that is entered by the user, the voice recognition application may detect a voice instruction (for example, displaying the payment interface of WeChat) in the voice signal entered by the user. After the electronic device detects, through the voice recognition application, the voice instruction (for example, opening a payment interface of WeChat) in the voice signal entered by the user, the electronic device may trigger starting of an unlocking module (for example, a face recognition module, a fingerprint recognition module, and a password unlocking module), and output a prompt, so that the user unlocks the electronic device first, and the electronic device performs an operation corresponding to the voice instruction (for example, opening the payment interface of WeChat) only after the user unlocks the electronic device.

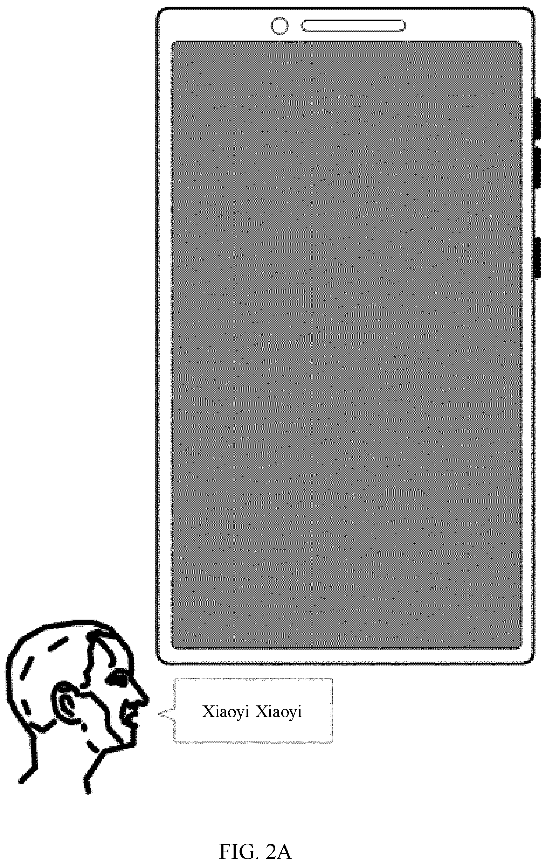

For example, as shown in FIG. 2A, when the electronic device is in the screen-locked state, the electronic device may obtain a first voice signal that is entered by the user. The electronic device may analyze whether the first voice signal includes a specified wake-up word (for example, "Xiaoyi Xiaoyi"). If the first voice signal includes the specified wake-up word, the electronic device may recognize a voice instruction entered by the user next.

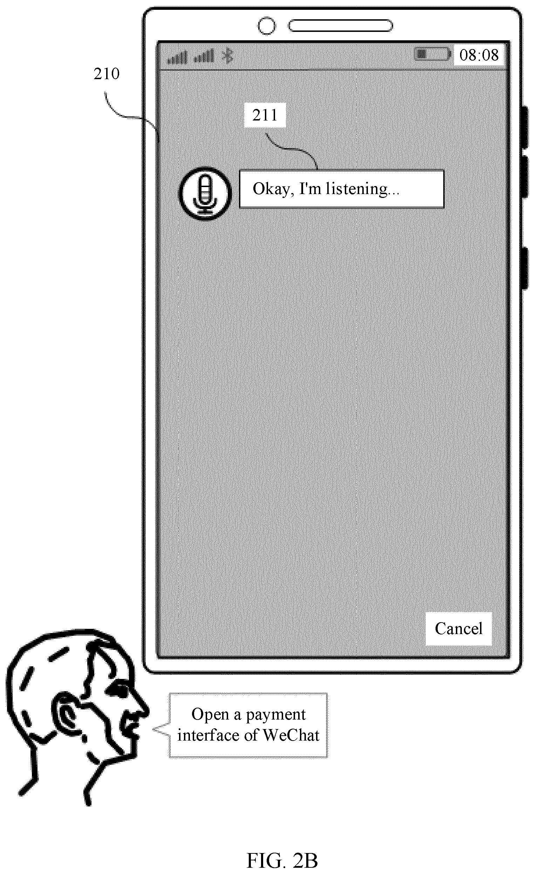

As shown in FIG. 2B, after the electronic device detects that the voice signal entered by the user includes the preset wake-up word (for example, "Xiaoyi Xiaoyi"), the electronic device may output a prompt, to prompt the user to continue to enter a voice signal. For example, the electronic device may display a text prompt 211 (such as "Okay, I'm listening") on a display. The electronic device may receive a second voice signal entered by the user, and the electronic device may detect a control instruction in the second voice signal through the voice recognition application.

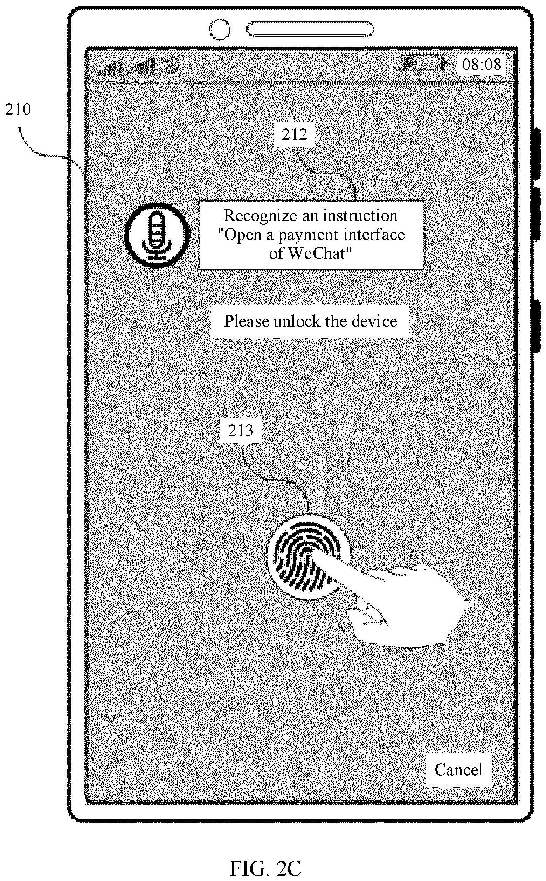

As shown in FIG. 2C, after detecting the control instruction (for example, opening the payment interface of WeChat) in the second voice signal through the voice recognition application, the electronic device may output an unlock prompt, to prompt the user to unlock the electronic device. The electronic device may receive an unlock operation (for example, an operation on a fingerprint recognition icon 213 on a touchscreen) of the user.

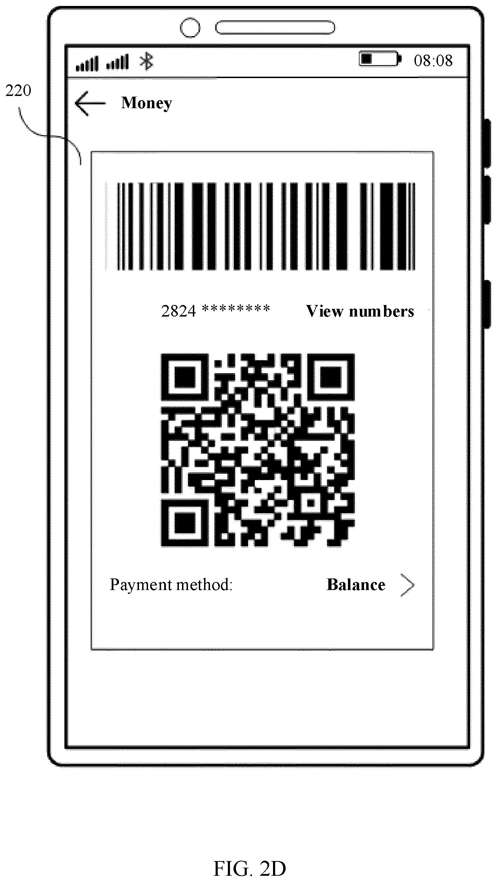

As shown in FIG. 2D, after the electronic device receives the unlock operation of the user and successfully unlocks a screen, the electronic device may perform an operation corresponding to the voice instruction in the second voice signal. For example, the voice instruction is displaying the payment interface of WeChat. As shown in FIG. 2D, the electronic device may start a WeChat application, and display a payment interface 220 of WeChat on the display.

According to the foregoing solution, when the electronic device is in the screen-locked state, if the user needs to perform an operation on the electronic device via voice, the user needs to first wake up a voice assistant on the electronic device by using the wake-up word. Only after the voice assistant on the electronic device is woken up, the electronic device starts to recognize a voice instruction from a voice signal entered by the user. After recognizing the voice instruction, the electronic device needs to be first unlocked by the user, and performs a corresponding operation according to the voice instruction only after being successfully unlocked. In this case, when the user needs to control the electronic device via voice, an operation is complex, operation time of the user is relatively long, and user experience is poor.

Based on the foregoing technical problems, embodiments of this application provide a voice control method, so that when an electronic device is in a screen-locked state, in response to a received user operation, the electronic device can perform identity authentication on a user, and trigger a voice recognition application to detect a voice instruction entered by the user. After the electronic device unlocks the screen and the voice recognition application detects the voice instruction, the electronic device can securely execute the detected voice instruction. In this way, when the electronic device is in the screen-locked state, by using an operation, the user may trigger authentication unlock and trigger the voice recognition application to detect the voice instruction, so as to control a function or an application on the electronic device. This simplifies operation steps for voice control over the electronic device by the user, and reduces operation time of the user.

The following describes a process in which the electronic device 100 performs authentication on a user.

When the electronic device 100 is in the screen-locked state: 1. The electronic device 100 may collect, in response to a received user operation, authentication information entered by the user (for example, face information, fingerprint information, digital password, and pattern password).

2. After collecting the authentication information entered by the user, the electronic device 100 may determine whether the collected authentication information matches a stored authentication information template. If the collected authentication information matches the stored authentication information template, the authentication on the user succeeds, and the electronic device 100 unlocks the screen.

The following describes a process in which the electronic device 100 triggers starting of a voice recognition application by using a wake-up word.
1. The electronic device 100 may receive an audio signal by using a microphone. When the user speaks a wake-up voice around the electronic device 100, the audio signal may include the wake-up voice. After receiving the audio signal, the electronic device 100 may separate the wake-up voice of the user from the audio signal. Then, the electronic device 100 may obtain a phoneme sequence by decoding from the wake-up voice in the voice signal of the user by using an acoustic model. After the phoneme sequence is decoded from the wake-up voice, the electronic device 100 may determine whether the decoded phoneme sequence matches a stored wake-up word phoneme sequence. If the decoded phoneme sequence matches the stored wake-up word phoneme sequence, it indicates that the wake-up voice includes the wake-up word. The electronic device 100 may be triggered to recognize a voice instruction in a voice signal entered by the user next. For a process in which the electronic device 100 recognizes the voice instruction, refer to the foregoing embodiments. Details are not described herein again.
2. The electronic device 100 may receive an audio signal by using a microphone. When the user speaks a wake-up voice around the electronic device 100, the audio signal may include the wake-up voice. After receiving the audio signal, the electronic device 100 may separate the wake-up voice of the user from the audio signal. Then, the electronic device 100 may obtain a phoneme sequence by decoding from the wake-up voice in the voice signal of the user by using an acoustic model. Then, the electronic device 100 further obtains text information by decoding the decoded phoneme sequence by using a voice model and a pronunciation dictionary of the voice model. After obtaining the text information through decoding, the electronic device 100 may determine whether the text information decoded from the wake-up voice includes a stored wake-up word text. If the text information decoded from the wake-up voice includes the wake-up word text, it indicates that the voice signal of the user includes the wake-up word. The electronic device 100 may be triggered to recognize a voice instruction in a voice signal entered by the user next. For a process in which the electronic device 100 recognizes the voice instruction, refer to the foregoing embodiments. Details are not described herein again.

In a possible implementation, the electronic device 100 may extract the wake-up word and a voiceprint feature of the user from the voice signal of the user. When the wake-up word matches a stored wake-up word template and the voiceprint feature of the user matches a stored voiceprint feature template, the electronic device 100 may recognize a voice instruction entered by the user next. In this way, only a specific user can wake up a voice assistant to recognize a voice instruction, and this improves information security of a terminal.

The following describes a process in which the electronic device 100 detects the voice instruction after triggering the voice recognition application.
1. The electronic device 100 may receive the audio signal by using the microphone. When the user speaks around the electronic device 100, an audio signal includes a voice signal of the user, and the voice signal of the user may include a voice instruction that is used to request the electronic device 100 to perform an operation corresponding to the voice instruction.
2. After receiving the audio signal by using the microphone, the electronic device 100 may separate the voice signal of the user from the audio signal. Then, the electronic device 100 may extract, from the voice signal of the user by using a feature extraction algorithm, a plurality of feature vectors including voice information. The feature extraction algorithm may include a mel-frequency cepstral coefficient (mel-frequency cepstral coefficient, MFCC), linear predictive codes (linear predictive codes, LPC), or the like.
3. The electronic device 100 may enter the plurality of feature vectors including the voice information to the acoustic model, to obtain a plurality of phoneme sequences.
4. The electronic device 100 may obtain, based on a language model and a phoneme dictionary, text information corresponding to the plurality of phoneme sequences.
5. After obtaining the text information corresponding to the plurality of phoneme sequences, the electronic device 100 may find, from an instruction library, a voice instruction corresponding to a keyword in the text information.

It should be noted that in the embodiments of this application, an audio signal may also be referred to as an audio signal, or a sound signal, and a voice signal may also be referred to as a speech signal, a voice signal, or the like.

The following describes a screen-locked state and a screen-unlocked state of the electronic device 100 in the embodiments of this application.

In the embodiments of this application, according to whether the electronic device 100 is locked, the electronic device 100 may have the screen-locked state and the screen-unlocked state. When the electronic device is in the screen-locked state, some functions are locked, that is, the electronic device does not provide some functions. A function provided by the electronic device in the screen-locked state has a relatively low requirement on data security. For example, the function provided by the electronic device in the screen-locked state may include: answering a call, hanging up a call, adjusting a music volume, starting a camera application, enabling/disabling an airplane mode, and the like. When the electronic device is in the screen-unlocked state, a locked function has a relatively high requirement on data security. For example, the locked function in the screen-unlocked state may include: starting some applications (for example, a WeChat application), a function provided by the application (for example, displaying a payment interface of WeChat), and the like.

When the user sets authentication information, in response to authentication information entered by a user, the electronic device 100 may determine whether the authentication information entered by the user is the same as a stored authentication information template. If the authentication information entered by the user is the same as the stored authentication information template, the electronic device 100 switches from the screen-locked state to the screen-unlocked state. The authentication information may be used to authenticate whether the current user has permission to use the electronic device 100. The authentication information may include but is not limited to face information, fingerprint information, password information, voiceprint information, and the like.

The following specifically describes the voice control method provided in this application with reference to application scenarios.

In some application scenarios, when the electronic device 100 is in a screen-locked state, the electronic device 100 may receive an operation that is performed by the user to trigger authentication unlock (for example, face authentication unlock, fingerprint authentication unlock, and password authentication unlock). In response to the operation used to trigger the authentication unlock, the electronic device 100 may perform authentication on the user, and trigger a voice recognition application to detect a voice instruction entered by the user. For example, the electronic device starts the voice recognition application, or the electronic device has run the voice recognition application in the background, and triggers a function of detecting a voice instruction by the voice recognition application. After the authentication succeeds and the voice recognition application detects the voice instruction (for example, displaying a payment interface of WeChat) that is entered by the user, the electronic device 100 may perform an operation (for example, displaying the payment interface of WeChat) corresponding to the voice instruction. In this way, when the electronic device 100 is in the screen-locked state, in response to the unlock triggering operation, the electronic device 100 may trigger authentication on the user, and trigger the voice recognition application to detect the voice instruction. That is, the user does not need to speak a voice wake-up word, and when the user triggers unlocking, the user directly speaks the voice instruction to control a function or an application on the electronic device. This simplifies operation steps for voice control over the electronic device by the user, and reduces operation time of the user.

In a possible implementation, when the electronic device 100 is in the screen-locked state, in response to the unlock triggering operation, the electronic device 100 may simultaneously perform the authentication on the user and trigger the voice recognition application to detect the voice instruction entered by the user. After the authentication succeeds and the electronic device 100 detects the voice instruction through the voice recognition application, the electronic device 100 may unlock a screen and perform the operation corresponding to the voice instruction. For example, an unlock instruction of the electronic device 100 may simultaneously trigger authentication unlock on the electronic device 100 and trigger a voice instruction detection function of the voice recognition application.

In a possible implementation, when the electronic device 100 is in the screen-locked state, the electronic device 100 may perform the authentication on the user in response to the unlock triggering operation. After the electronic device 100 starts the authentication on the user, the electronic device 100 may trigger the voice recognition application to detect the voice instruction entered by the user. After the authentication succeeds and the electronic device 100 detects the voice instruction through the voice recognition application, the electronic device 100 may unlock the screen and perform the operation corresponding to the voice instruction.

In a possible implementation, when the electronic device 100 is in the screen-locked state, the electronic device 100 may perform the authentication on the user in response to the unlock triggering operation. When the authentication succeeds, the electronic device 100 may unlock the screen and trigger a voice assistant to detect the voice instruction. For example, an unlock success instruction of the electronic device, regardless of a fingerprint unlock instruction, a face unlock instruction, or the like, may directly trigger a voice instruction detection function of the voice recognition application, or when the electronic device displays an unlock screen, a voice instruction detection function of the voice recognition application may be directly triggered.

In a possible implementation, if the electronic device 100 detects no voice instruction within a period of time (for example, 5s) after triggering starting of the voice recognition application, the electronic device 100 may close the voice recognition application. In this way, when the user does not need to control the electronic device via voice, the voice recognition application can be closed in time, and this reduces power consumption.

The following specifically describes the voice control method in this application scenario by using a face authentication manner as an example.

When the electronic device 100 is in a screen-locked state, and receives an operation (for example, lifting) that is performed by the user to trigger face authentication, the electronic device 100 may simultaneously collect and authenticate face information and trigger the voice recognition application (for example, a voice assistant) to detect a voice instruction entered by the user. After the face authentication succeeds and the electronic device 100 detects the voice instruction through the voice recognition application, the electronic device 100 may unlock the screen and perform an operation corresponding to the voice instruction. In this way, when the electronic device 100 is in the screen-locked state, the user does not need to speak a voice wake-up word. When the user lifts the electronic device 100 to trigger face unlock, the user directly speaks the voice instruction to control a function or an application on the electronic device 100. This simplifies operation steps for voice control over the electronic device by the user, and reduces operation time of the user.

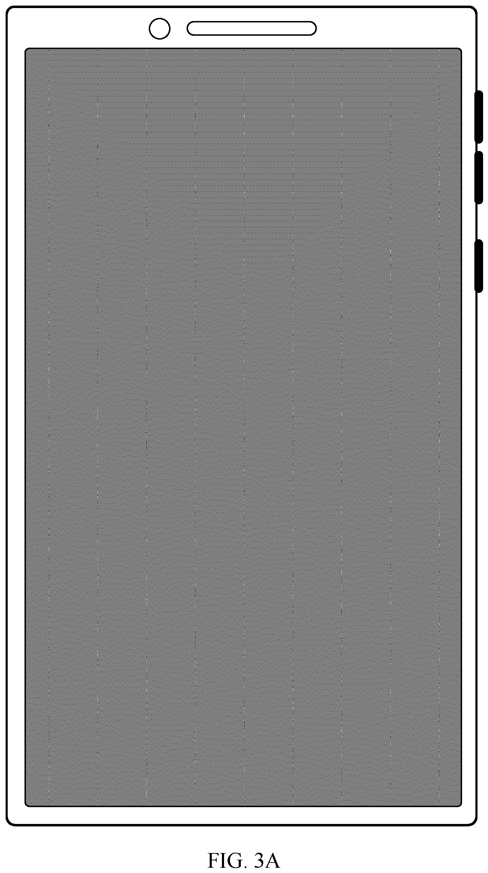

For example, as shown in FIG. 3A, the electronic device 100 is in a screen-off and screen-locked state.

When the electronic device 100 is in the screen-off and screen-locked state, the electronic device 100 may receive the lifting operation of the user. In response to the lifting operation, the electronic device 100 may collect the face information of the user, and trigger the voice recognition application to detect the voice instruction entered by the user.

The electronic device 100 may detect the lifting operation of the user in the following manner: The electronic device 100 may detect, through one or more sensors, that the electronic device 100 is rotated, that the electronic device 100 moves forward relative to the user, and that the electronic device 100 moves upward relative to the horizon, to determine whether a position status of the electronic device changes according to a preset condition. If the position status of the electronic device changes according to the preset condition, the electronic device 100 may determine that the lifting operation of the user is received. Specifically, a terminal may detect a motion parameter of the terminal, then determine, based on the motion parameter, whether the terminal is rotated, or whether the terminal moves forward relatively to the user, or whether the terminal moves upward relatively to the horizon, and finally determine, based on a determining result, whether a position status of the terminal changes according to the preset condition.

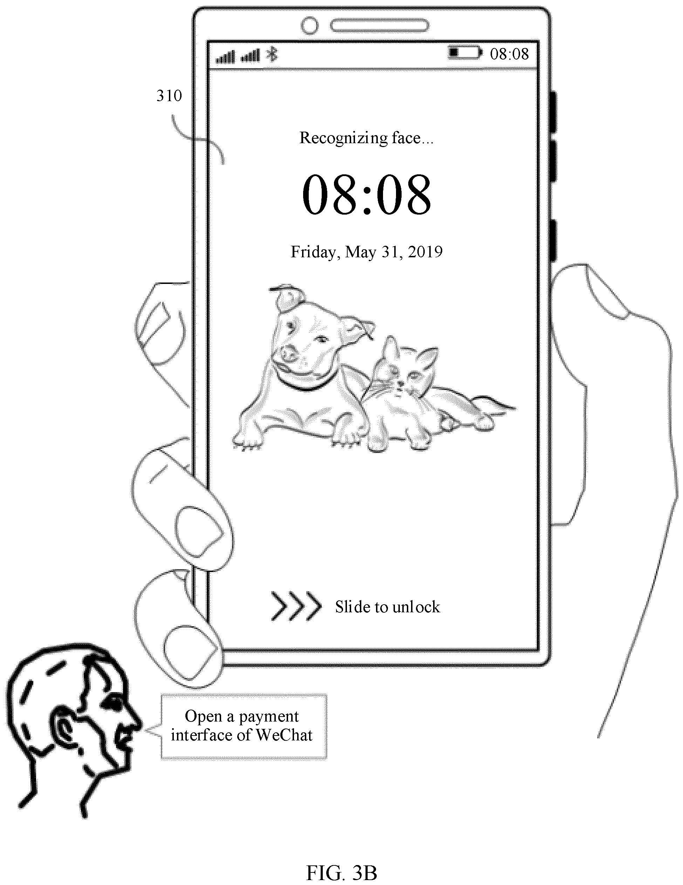

For example, as shown in FIG. 3B, in response to the lifting operation, the electronic device 100 may collect the face information, and trigger the voice recognition application to detect the voice instruction in a voice signal of the user that is collected by a microphone (for example, the user enters "Open a payment interface of WeChat" via voice). The electronic device 100 may collect the face information by using a camera, and when collecting the face information, the electronic device 100 may turn on a screen to display a lock screen 310.

In a possible implementation, when the electronic device 100 collects the face information, the electronic device 100 may display a face recognition prompt 311 on the lock screen, to prompt the user that face recognition is being performed. In specific implementation, the electronic device 100 may alternatively not display the face recognition prompt 311.

After collecting the face information, the electronic device 100 may match the collected face information with a stored face information template.

In a possible implementation, the electronic device 100 may detect the voice instruction in the voice signal of the user through the voice recognition application, and then determine that the processed face information matches the stored face information template. In this case, the electronic device 100 may unlock the screen and directly perform an operation corresponding to the voice instruction.

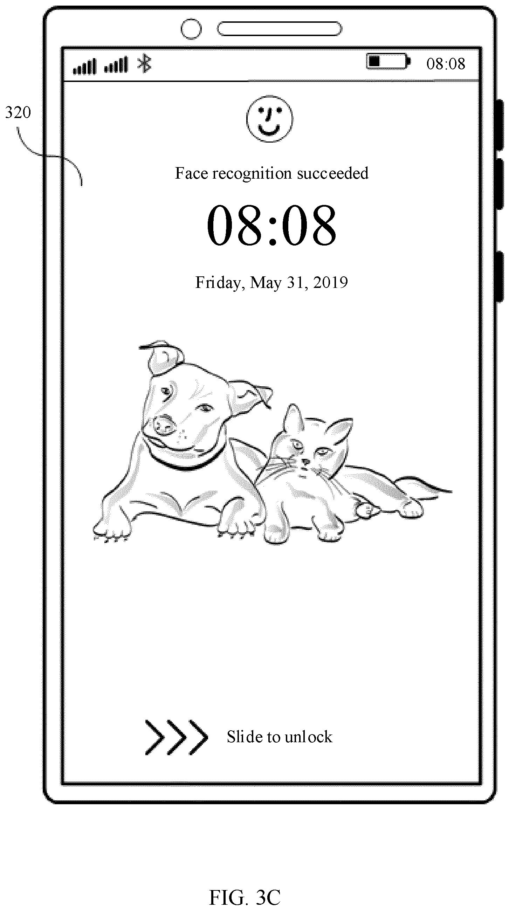

For example, as shown in FIG. 3C, the electronic device 100 first detects the voice instruction in the voice signal of the user through the voice recognition application, and then determines that the collected face information matches the stored face information template. After determining that the processed face information matches the stored face information template, the electronic device 100 may output a face recognition success prompt 312, to prompt the user that the face recognition succeeds. After outputting the face recognition success prompt for a period of time (for example, 0.5 seconds), the electronic device 100 may execute the voice instruction in the voice signal of the user.

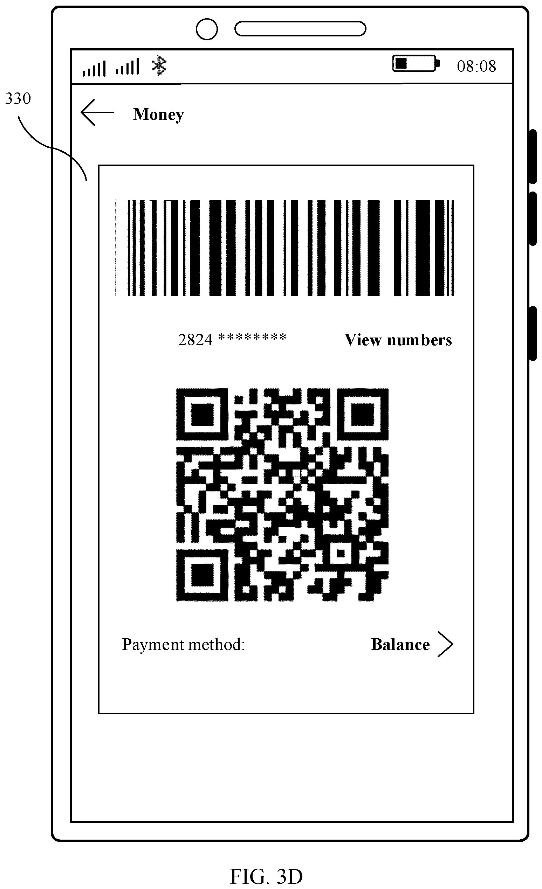

As shown in FIG. 3D, after the electronic device 100 outputs the face recognition success prompt for the period of time (for example, 0.5 seconds), the electronic device may unlock the screen and perform the operation corresponding to the voice instruction in the voice signal of the user, for example, displaying a payment interface 320 of WeChat.

In specific implementation, the electronic device 100 first detects the voice instruction through the voice recognition application, and when determining that the processed face information matches the stored face information template, the electronic device 100 may not output the face recognition success prompt shown in FIG. 3C, but directly unlocks the screen and executes the voice instruction. For example, the electronic device 100 directly unlocks the screen and displays the payment interface 320 of WeChat shown in FIG. 3D.

In a possible implementation, the electronic device 100 first determines that the processed face information matches the stored face information template, and then detects the voice instruction in the voice signal of the user through a voice application. In this case, the electronic device 100 may first unlock the screen (for example, the electronic device 100 unlocks the screen and displays a home screen) when determining that the processed face information matches the stored face information template. After detecting the voice instruction through the voice recognition application, the electronic device 100 may perform the operation corresponding to the voice instruction.

In a possible implementation, in response to an operation (for example, a lifting operation shown in FIG. 3B) that is performed by the user to trigger face unlock, the electronic device 100 may collect face information, and determine whether the collected face information matches a stored face information template. If the collected face information matches the stored face information template, the electronic device 100 may unlock a screen (for example, the electronic device 100 unlocks the screen and displays the home screen). When detecting that the electronic device 100 is switched from the screen-locked state to a screen-unlocked state, the electronic device 100 may collect the voice signal of the user by using the microphone, and trigger the voice recognition application to detect the voice instruction. After detecting the voice instruction through the voice recognition application, the electronic device 100 may directly perform the operation corresponding to the voice instruction.

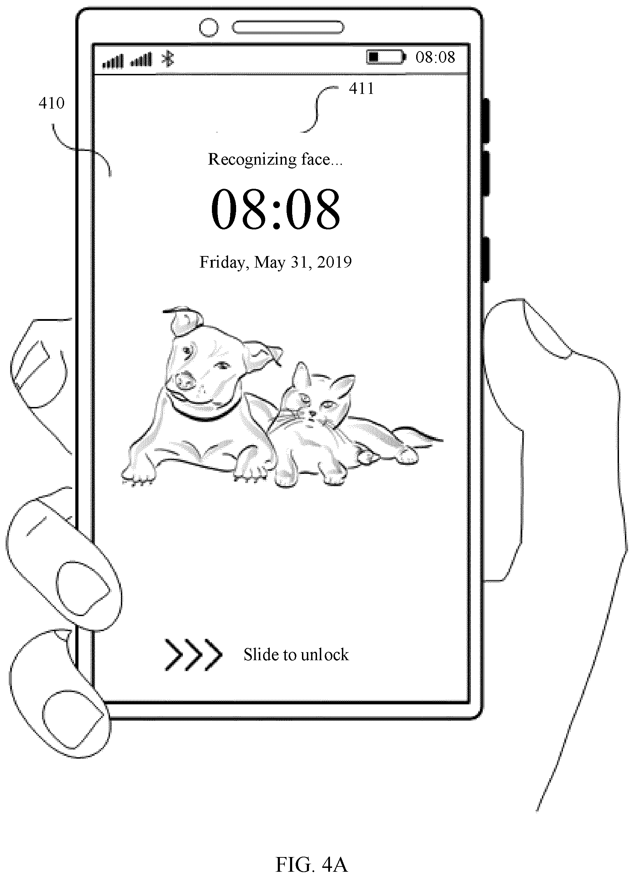

For example, as shown in FIG. 4A, in response to an operation (for example, a lifting operation) that is performed by the user to trigger face unlock, the electronic device 100 may enable a face recognition module (for example, a dot matrix transmitter and a camera) to collect face information. When the electronic device 100 receives the operation (for example, the lifting operation) that is performed by the user to trigger face unlock, the electronic device 100 may turn on the screen to display a lock screen 410.

When the electronic device 100 collects the face information, the electronic device 100 may display a face recognition prompt 411 on the lock screen, to prompt the user that face recognition is being performed. In specific implementation, the electronic device 100 may alternatively not display the face recognition prompt 411.

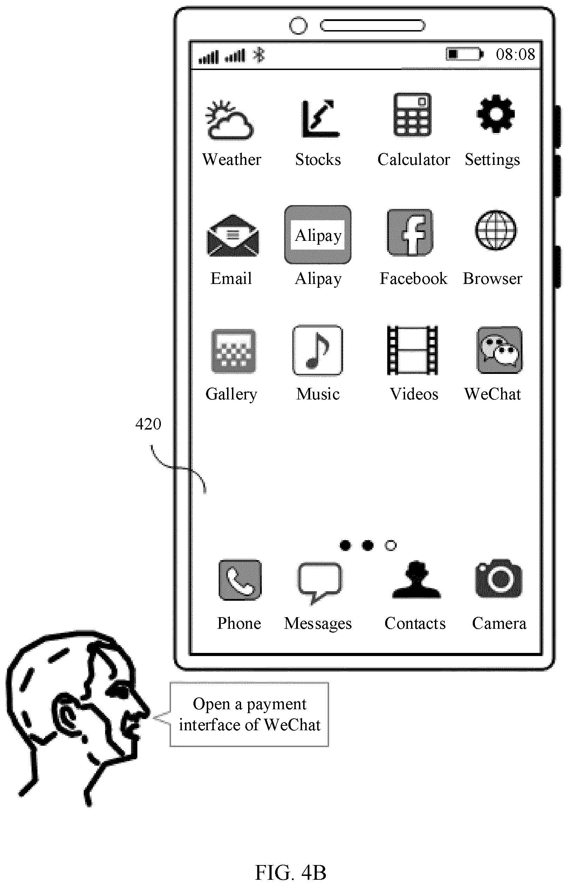

As shown in FIG. 4B, when determining that the collected face information successfully matches the stored face information template, the electronic device 100 may unlock the screen and display a home screen 420, collect a voice signal of the user by using a microphone, and trigger the voice recognition application to detect the voice instruction in the voice signal of the user. For example, the voice instruction may include text information "Open a payment interface of WeChat". The home screen 420 displays a page on which application icons are arranged, and the page includes a plurality of application icons (for example, a Weather application icon, a Stock application icon, a Calculator application icon, a Settings application icon, an Email application icon, an Alipay application icon, a Facebook application icon, a Browser application icon, a Gallery application icon, a Music application icon, a Video application icon, and a WeChat application icon). A page indicator is further included below the plurality of application icons, to indicate a positional relationship between the currently displayed page and another page. A plurality of tray icons (for example, a Dial application icon, a Messages application icon, a Contacts application icon, a Camera application icon) are provided below the page indicator, and the tray icons are always displayed during page switching. The page may include the plurality of application icons and the page indicator. Alternatively, the page indicator may not be a part of the page and exist separately. The tray icons are also optional. This is not limited in the embodiments of this application.

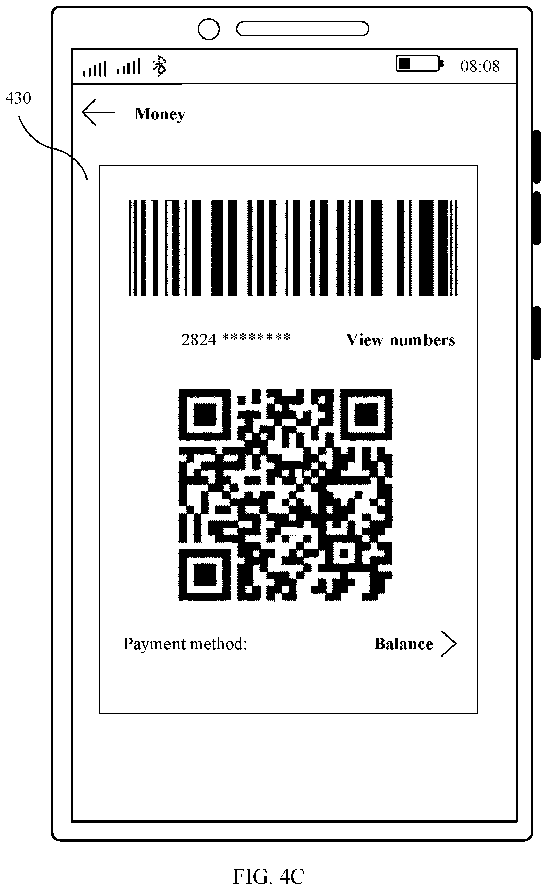

As shown in FIG. 4C, after detecting the voice instruction (for example, including the text information "Open a payment interface of WeChat") from the voice signal of the user through the voice recognition application, the electronic device 100 may perform the operation corresponding to the voice instruction, for example, starting a WeChat application, and displaying a payment interface 430 of WeChat in the WeChat application.

It may be understood that, when the face authentication fails, the electronic device 100 may enter an authentication failure prompt, to prompt the user to re-enter a password. The electronic device 100 may perform face authentication on the user again.

The following specifically describes the voice control method in this application scenario by using a fingerprint authentication manner as an example.

When the electronic device 100 receives an operation (for example, pressing a power button) that is performed by the user to trigger fingerprint authentication in the screen-locked state, the electronic device 100 may simultaneously collect and authenticate fingerprint information of the user and trigger the voice recognition application (for example, a voice assistant) to detect a voice instruction entered by the user. After the fingerprint authentication succeeds and the electronic device 100 detects, through the voice recognition application, the voice instruction entered by the user, the electronic device 100 may perform an operation corresponding to the voice instruction. In this way, in the screen-locked state, the electronic device 100 may not detect a voice wake-up word spoken by the user. When the user triggers fingerprint unlock, the electronic device 100 directly triggers the voice recognition application to detect the voice instruction. This simplifies operation steps for voice control over a function or an application on the electronic device 100 by the user, and reduces operation time of the user.

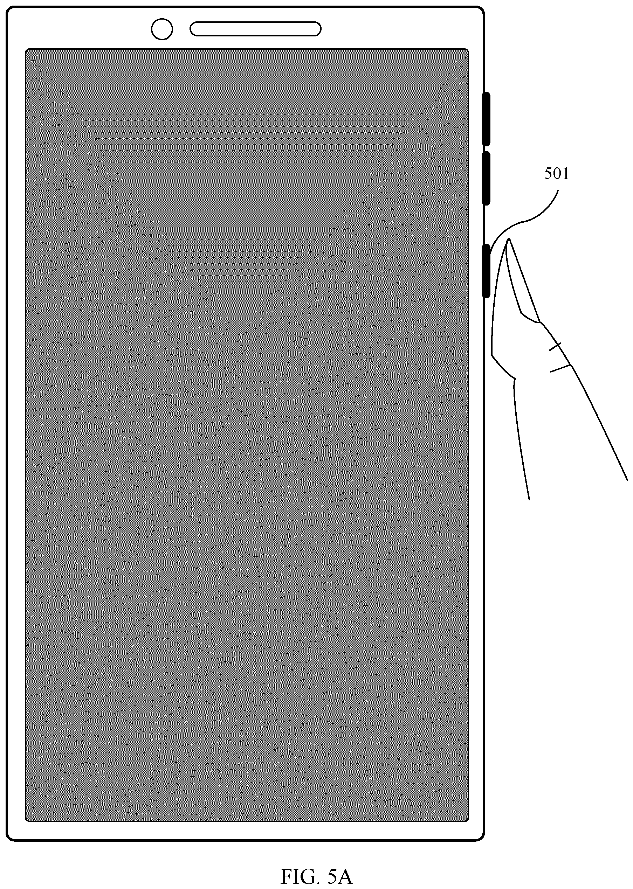

For example, as shown in FIG. 5A, the electronic device 100 is in a screen-off and screen-locked state.

When the electronic device 100 is in the screen-off and screen-locked state, the electronic device 100 may receive an input operation (for example, pressing) performed by a user on a power button 501. In response to the input operation (for example, pressing) on the power button 501, the electronic device 100 may collect fingerprint information of the user, and trigger the voice recognition application to detect a voice instruction entered by the user.

In a possible implementation, the electronic device 100 first detects, through the voice recognition application, a voice instruction from a voice signal of the user that is collected by a microphone, and then determines that the collected fingerprint information matches a stored fingerprint information template. In this case, the electronic device 100 may unlock a screen and directly perform an operation corresponding to the voice instruction.

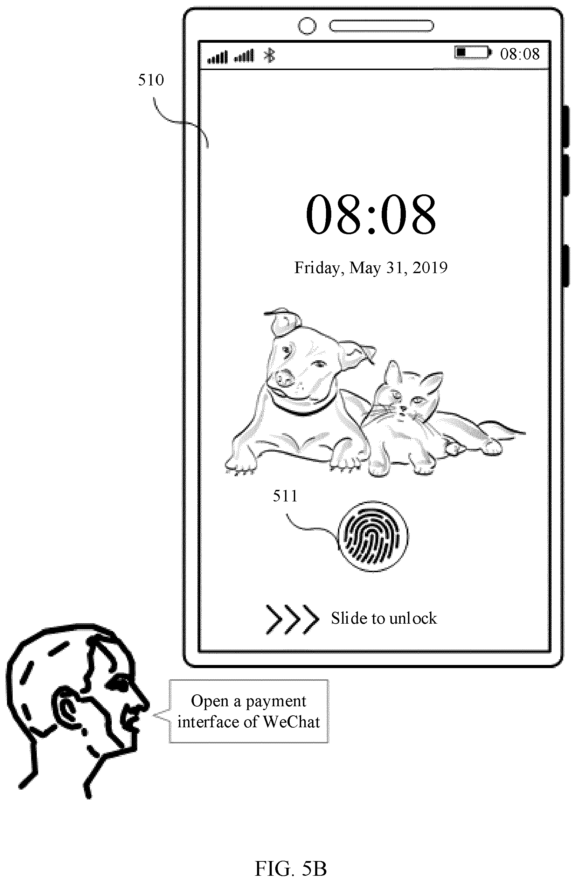

For example, as shown in FIG. 5B, a fingerprint collection module may be disposed below a touchscreen and coupled to the touchscreen. After enabling the fingerprint collection module below the touchscreen, the electronic device 100 may display a fingerprint recognition icon 511 on a lock screen 510. The electronic device 100 may collect a fingerprint of a finger of the user when the finger of the user touches a fixed area on the touchscreen. Therefore, the fingerprint recognition icon 511 may be displayed in an area in which the fingerprint collection module can collect a fingerprint (for example, in a bottom-middle position on the touchscreen). After the electronic device 100 collects the voice signal of the user (for example, the user enters the voice signal including text information "Open a payment interface of WeChat"), the electronic device 100 may recognize the voice instruction (for example, displaying the payment interface of WeChat) in the voice signal of the user.

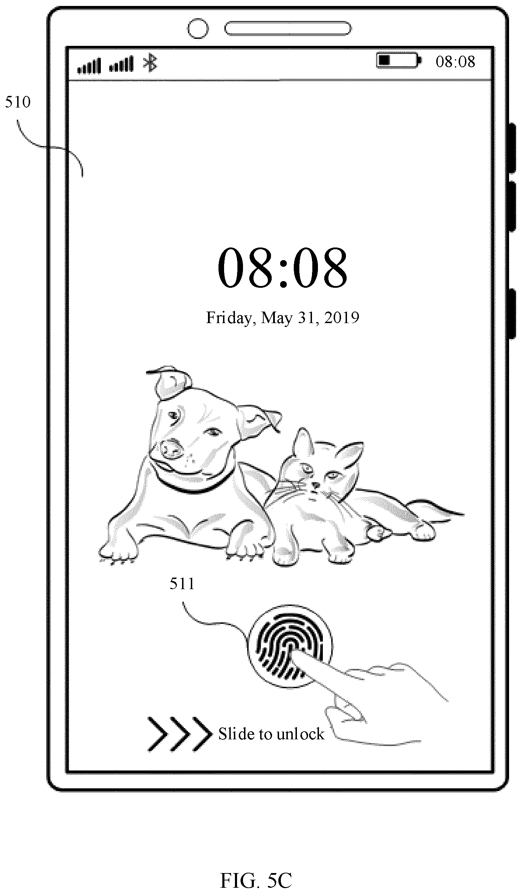

As shown in FIG. 5C, the electronic device 100 collects the fingerprint information of the user only after detecting the voice instruction through the voice recognition application. The electronic device 100 may determine whether the collected fingerprint information matches the stored fingerprint information template. If the collected fingerprint information matches the stored fingerprint information template, the electronic device 100 may unlock the screen and directly perform the operation corresponding to the voice instruction.

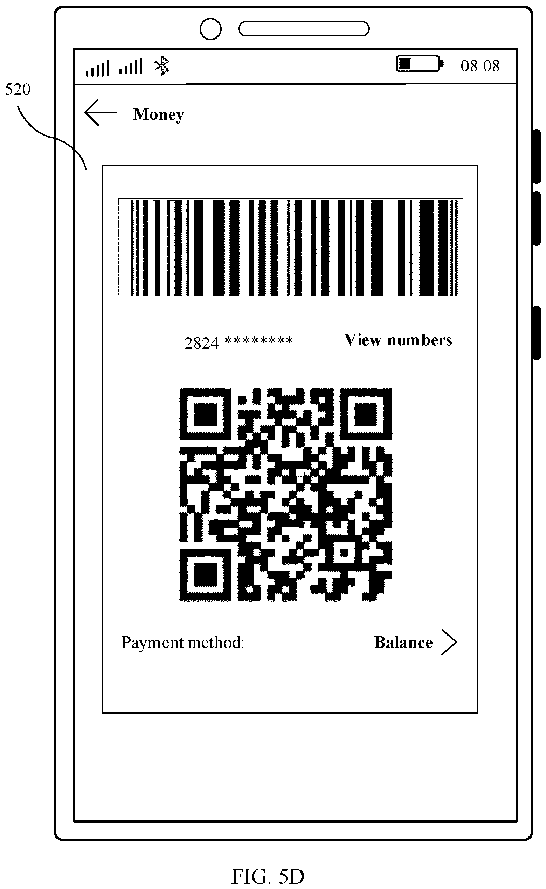

As shown in FIG. 5D, when the electronic device 100 determines that the collected fingerprint information matches the stored fingerprint information template, the electronic device 100 unlocks the screen and displays a payment interface 520 of WeChat.

In a possible implementation, the electronic device 100 first collects the fingerprint information of the user and determines that the collected fingerprint information matches the stored fingerprint information template, and then recognizes the voice instruction from the voice signal of the user through the voice recognition application. In this case, when determining that the collected fingerprint information matches the stored fingerprint information template, the electronic device 100 may unlock the screen. Then, when recognizing, through the voice recognition application, the voice instruction entered by the user, the electronic device 100 performs the operation corresponding to the voice instruction.

In a possible implementation, the electronic device 100 may first start collecting the fingerprint information of the user in response to an operation of triggering fingerprint unlock. After detecting that the fingerprint information of the user starts to be collected, the electronic device 100 triggers to collect the voice signal of the user and triggers starting of the voice recognition application to detect the voice instruction in the voice signal of the user. When the electronic device 100 determines that the collected fingerprint information matches the stored fingerprint information template, and detects the voice instruction through the voice recognition application, the electronic device 100 may perform the operation corresponding to the voice instruction.

In a possible implementation, after collecting the fingerprint information of the user, the electronic device 100 may determine whether the collected fingerprint information matches the stored fingerprint information template. If the collected fingerprint information matches the stored fingerprint information template, the electronic device 100 may unlock the screen, collect the voice signal of the user, and trigger the voice recognition application to detect the voice instruction in the voice signal of the user. After detecting the voice instruction, the electronic device 100 may perform the operation corresponding to the voice instruction.

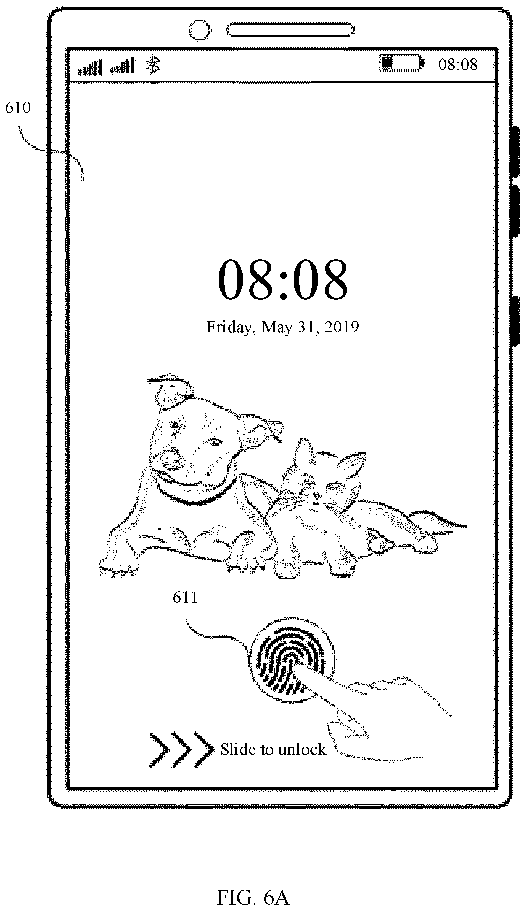

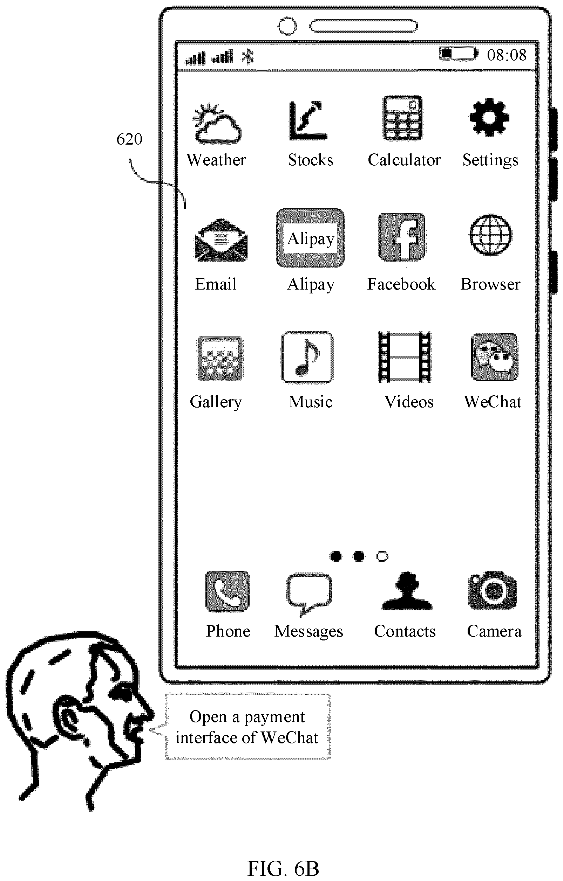

For example, as shown in FIG. 6A, the electronic device 100 may start the fingerprint collection module and display a fingerprint icon 611 in response to the operation of triggering fingerprint unlock. The electronic device 100 may receive a touch operation performed by the user on the fingerprint recognition icon 611. In response to the touch operation performed on the fingerprint recognition icon 611, the electronic device 100 may collect fingerprint information of the user, and determine whether the collected fingerprint information matches a stored fingerprint information template. If the collected fingerprint information matches the stored fingerprint information template, the electronic device 100 unlocks the screen and displays a home screen 620 shown in FIG. 6B. The home screen 620 shown in FIG. 6B is the same as the home screen 420 shown in FIG. 4B. Therefore, the foregoing text description of the home screen 420 shown in FIG. 4B is also applicable to the home screen 620 shown in FIG. 6B. Details are not described herein again.

As shown in FIG. 6B, after determining that the collected fingerprint information matches the stored fingerprint information template, the electronic device 100 may collect a voice signal of the user, and trigger the voice recognition application to detect a voice instruction in the voice signal of the user. Text information included in the voice signal of the user may be "Open a payment interface of WeChat", and the electronic device 100 may recognize, from the voice signal of the user, that an operation corresponding to the voice control signal instruction is "displaying the payment interface".

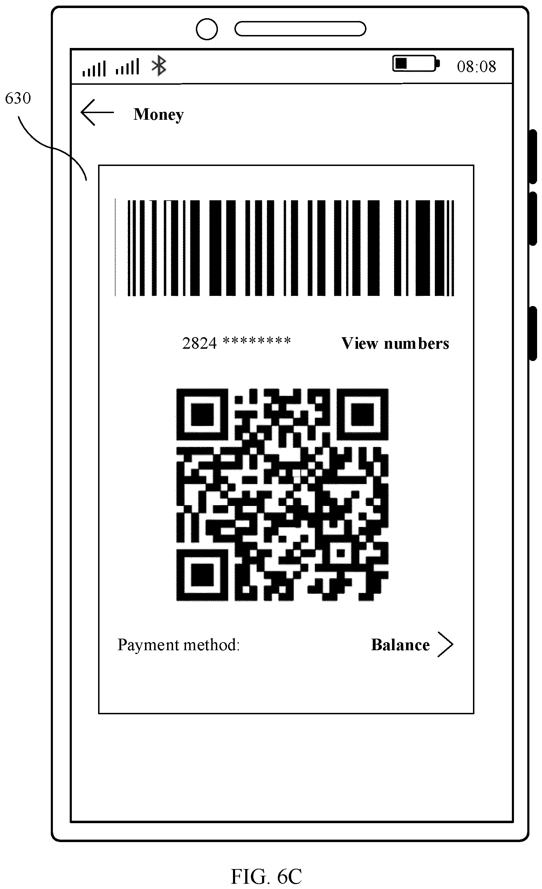

As shown in FIG. 6C, after detecting the voice control signal instruction from the voice signal of the user through the voice recognition application, the electronic device 100 may perform the operation corresponding to the voice instruction, for example, starting a WeChat application, and displaying a payment interface 630 of WeChat.

It may be understood that, when fingerprint authentication fails, the electronic device 100 may enter an authentication failure prompt to prompt the user to re-enter fingerprint information. The electronic device 100 may perform fingerprint authentication on the user again.

In the embodiments of this application, if the fingerprint collection module may also be disposed outside the electronic device 100, the electronic device 100 may collect fingerprint information of the user by using the external fingerprint collection module. When detecting that the user touches the external fingerprint recognition module, the electronic device 100 may collect the fingerprint information of the user, collect a voice signal of the user, and detect a voice instruction in the voice signal of the user by using the voice recognition application. When the electronic device 100 determines that the collected fingerprint information matches the stored fingerprint information template, and detects the voice instruction through the voice recognition application, the electronic device 100 may perform the operation corresponding to the voice instruction.

The following specifically describes the voice control method in this application scenario by using a password authentication manner as an example.

When the electronic device 100 receives an operation (for example, a sliding operation on the lock screen) that is performed by the user to trigger password authentication in the screen-locked state, the electronic device 100 may display a password unlock interface, and trigger the voice recognition application (for example, a voice assistant) to detect a voice instruction entered by the user. After password unlock succeeds and the electronic device 100 detects the voice instruction (for example, displaying a payment interface of WeChat) through the voice recognition application, the electronic device 100 may perform an operation (for example, displaying the payment interface of WeChat) corresponding to the voice instruction. In this way, in the screen-locked state, the electronic device 100 may not detect a voice wake-up word. After the password unlock interface is displayed, the electronic device 100 directly triggers the voice recognition application to detect the voice instruction. This simplifies operation steps for voice control over a function or an application on the electronic device 100 by the user, and reduces operation time of the user.

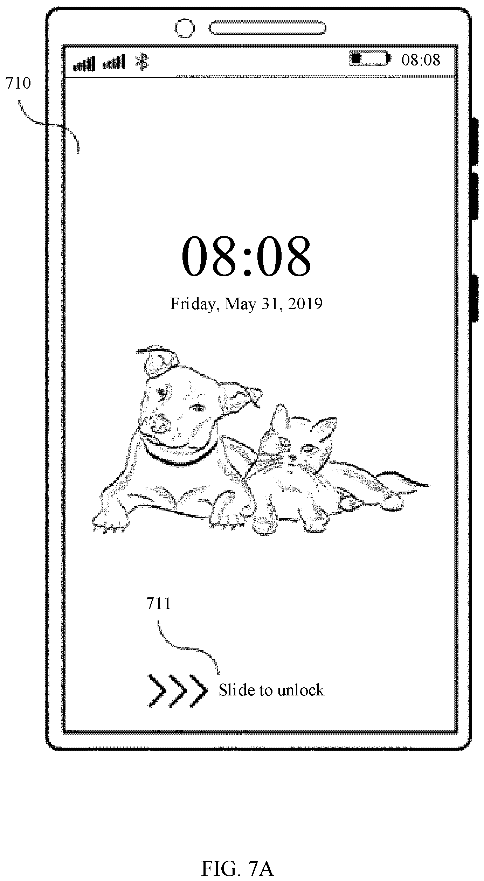

For example, as shown in FIG. 7A, the electronic device 100 is in a screen-on and screen-locked state. The electronic device 100 may display a lock screen 710, and the lock screen 710 includes an unlock triggering area 711.

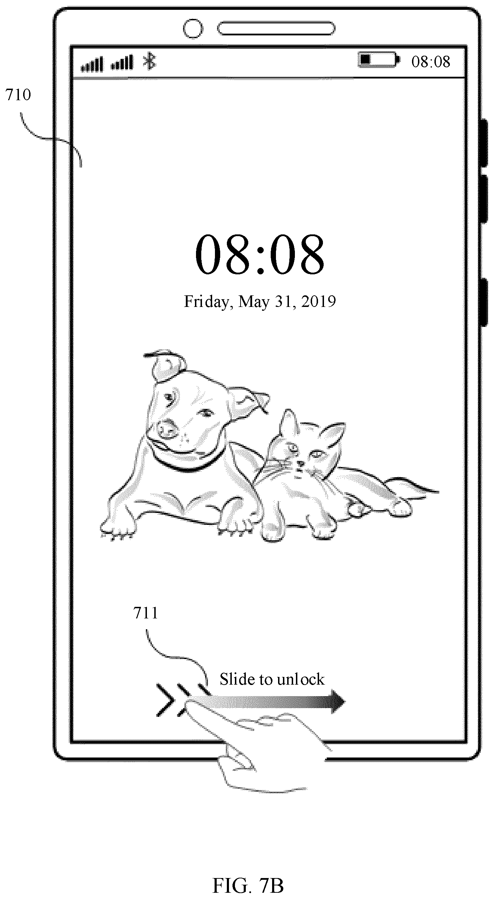

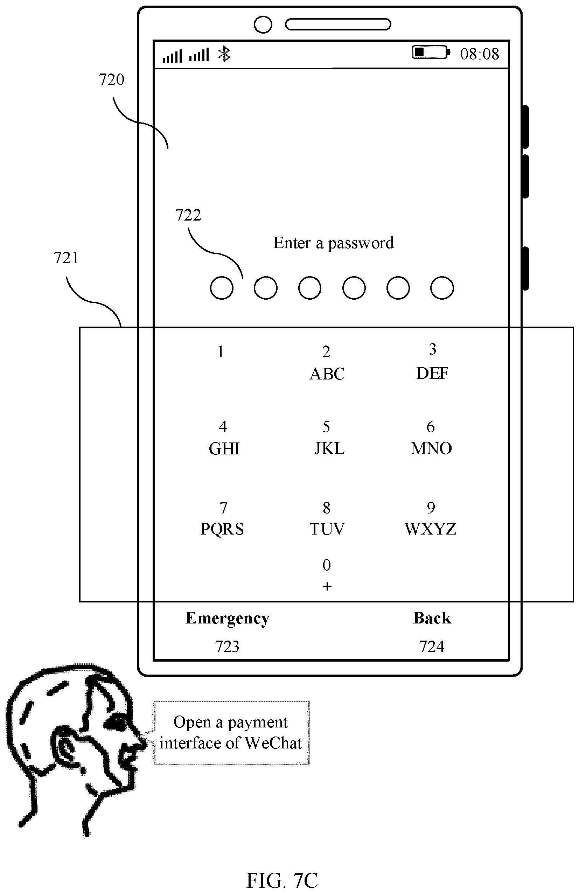

As shown in FIG. 7B, the electronic device 100 may receive an input operation (for example, sliding from left to right) performed by the user on the unlock triggering area 711. In response to the input operation on the unlock triggering area 711, the electronic device 100 may display a password unlock interface 720 shown in FIG. 7C, and trigger the voice recognition application to detect a voice instruction in a voice signal of the user collected by a microphone. It may be understood that, after displaying the password unlock interface, the electronic device 100 may collect the voice signal of the user by using the microphone, and trigger the voice recognition application to detect the voice instruction in the voice signal of the user.

As shown in FIG. 7C, the password unlock interface 720 includes a virtual numeric keypad 721, a password input box 722, an emergency call button 723, and a return button 724. The virtual numeric keypad 721 is used to receive an input of the user, to fill a password in the password input box 722. The password input box 722 is used to prompt the user to enter a password with a specified quantity of characters (for example, 6 characters). Each time the user enters a character, the password input box 722 prompts that the user has entered one character. After the user has entered the password with the specified quantity of characters, the electronic device 100 may determine whether the password with the specified quantity of characters that is entered by the user matches a stored password template. When the matching succeeds, the electronic device 100 successfully unlocks the screen.

Only after the electronic device 100 detects the voice instruction through the voice recognition application, the electronic device 100 determines that the password with the specified quantity of characters that is entered by the user matches the stored password template, so that the electronic device 100 can unlock the screen and execute the voice instruction recognized from the voice signal of the user.

For example, as shown in FIG. 7C, when displaying the password unlock interface 720, the electronic device 100 may collect the voice signal of the user by using the microphone, for example, a voice signal including text information "Open a payment interface of WeChat". When collecting the voice signal of the user, the electronic device 100 may detect the voice instruction in the voice signal of the user through the voice recognition application.

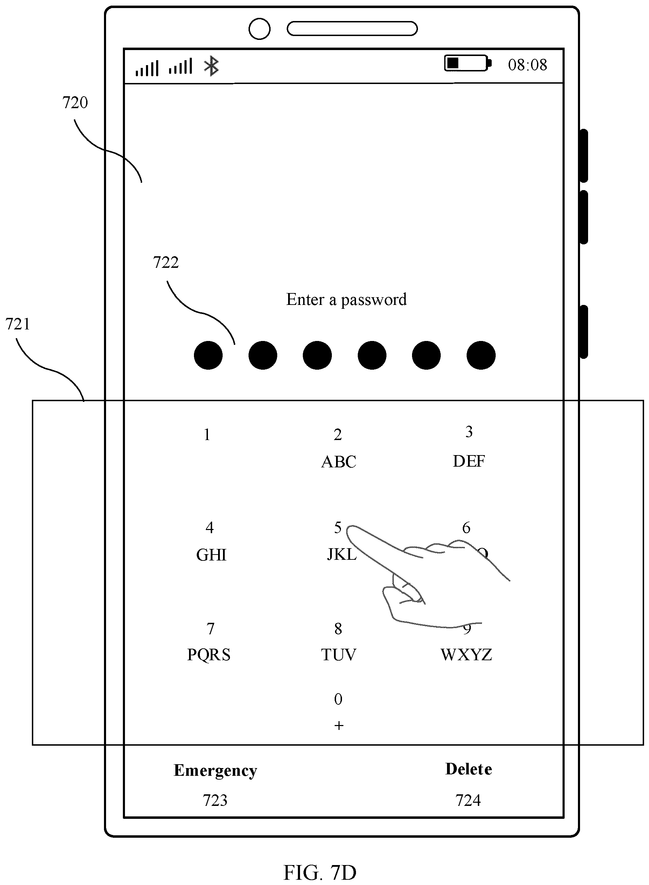

As shown in FIG. 7D, after detecting the voice instruction (for example, displaying the payment interface of WeChat) through the voice recognition application, the electronic device 100 may receive the password with the specified quantity of characters that has been entered by the user. The electronic device 100 may determine whether the password with the specified quantity of characters that is entered by the user matches the stored password template. If the password with the specified quantity of characters that is entered by the user matches the stored password template, the electronic device 100 may unlock the screen and execute the detected voice instruction.

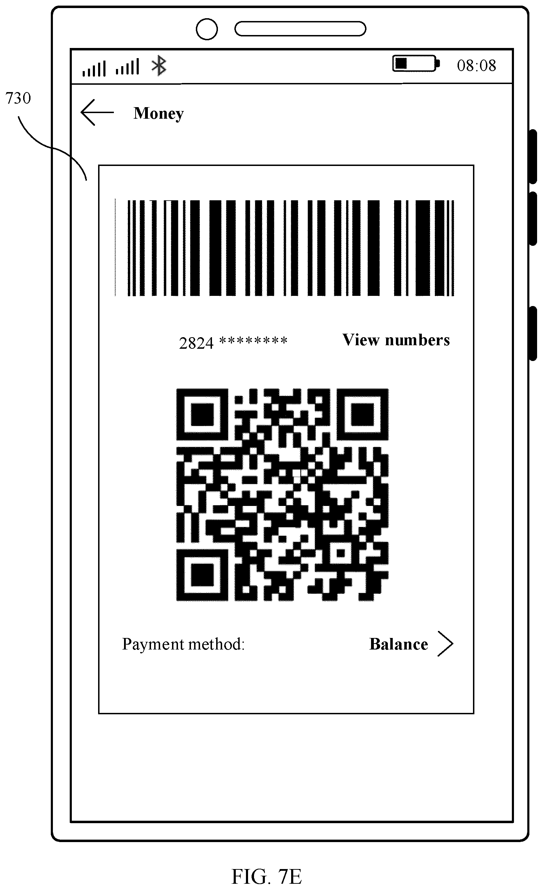

As shown in FIG. 7E, after the electronic device 100 recognizes, from the voice signal of the user, that the voice instruction is "displaying the payment interface of WeChat", and determines that the password with the specified quantity of characters that is entered by the user matches the stored password template, the electronic device 100 may unlock the screen and display a payment interface 730 of WeChat.

In a possible implementation, after the electronic device 100 first receives the password with the specified quantity of characters that has been entered by the user and determines that the password with the specified quantity of characters that is entered by the user matches the stored password template, the electronic device 100 detects the voice instruction from the voice signal of the user through the voice recognition application. In this case, the electronic device 100 may unlock the screen (for example, the electronic device 100 unlocks the screen and displays a home screen) after determining that the password with the specified quantity of characters that is entered by the user matches the stored password template. After detecting the voice instruction from the voice signal of the user through the voice recognition application, the electronic device 100 performs an operation (for example, "displaying the payment interface of WeChat") corresponding to the voice instruction.

In a possible implementation, the electronic device 100 may display a password unlock interface after the user triggers a password unlock operation. After the password unlock interface is displayed, the electronic device 100 may receive the password with the specified quantity of characters (for example, 6 characters) that is entered by the user. After receiving the password with the specified quantity of characters that has been entered by the user, the electronic device 100 may determine whether the password with the specified quantity of characters matches the stored password template. If the password with the specified quantity of characters matches the stored password template, the electronic device 100 may unlock the screen and display the home screen. After the electronic device 100 unlocks the screen, the electronic device 100 may collect the voice signal of the user, and detect the voice instruction in the voice signal of the user through the voice recognition application. After the electronic device 100 detects the voice instruction through the voice recognition application, the electronic device 100 may perform the operation (for example, "displaying the payment interface of WeChat") corresponding to the voice instruction.

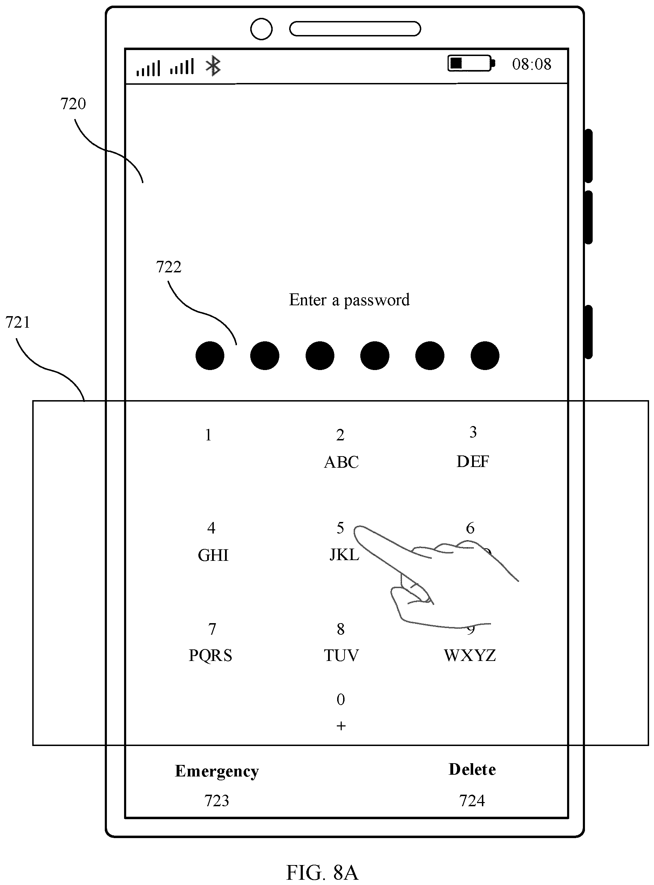

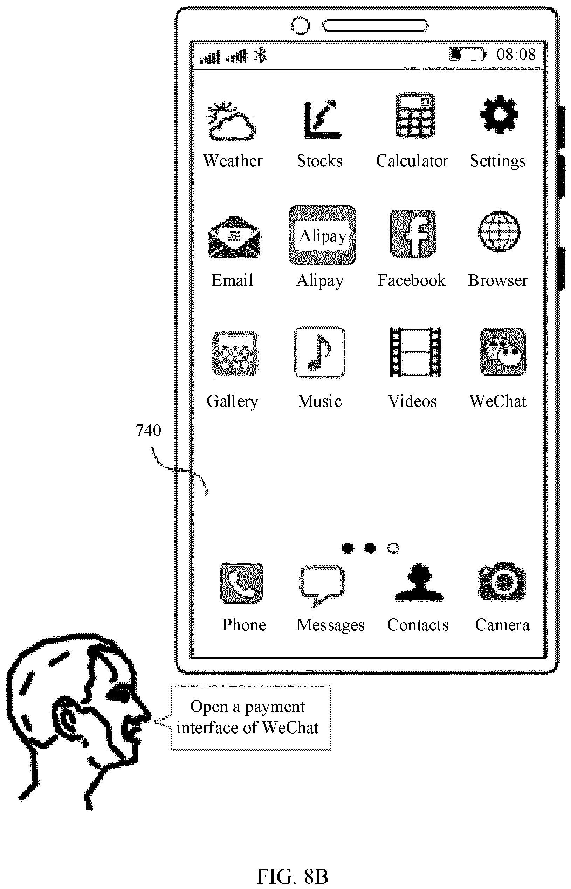

For example, as shown in FIG. 8A, the electronic device 100 displays the password unlock interface 720. The electronic device 100 may receive the password with the specified quantity of characters (for example, 6 characters) that is entered by the user. The electronic device 100 may determine whether the password with the specified quantity of characters matches the stored password template. If the password with the specified quantity of characters matches the stored password template, the electronic device 100 may unlock the screen and display the home screen 740 shown in FIG. 8B. The home screen 740 shown in FIG. 7B is the same as the home screen 420 shown in FIG. 4B. Therefore, the foregoing text description of the home screen 420 shown in FIG. 4B is also applicable to the home screen 740 shown in FIG. 7B. Details are not described herein again.

As shown in FIG. 8B, after the electronic device 100 determines that collected fingerprint information matches the stored fingerprint information template, the electronic device 100 may collect the voice signal of the user, and detect the voice instruction in the voice signal of the user through the voice recognition application. For example, text information in the voice signal of the user may be "Open a payment interface of WeChat", and an operation corresponding to the voice instruction recognized by the electronic device 100 is "displaying the payment interface of WeChat".

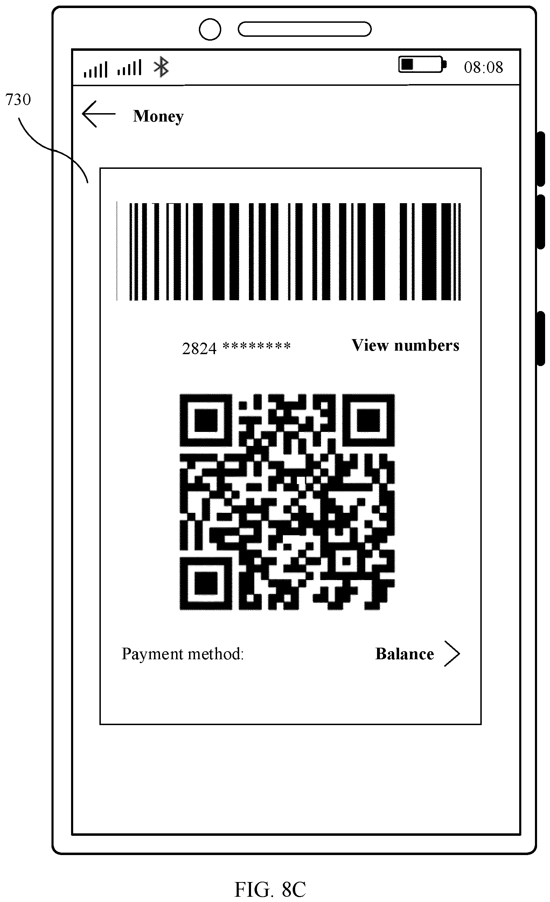

As shown in FIG. 8C, after recognizing a voice control signal instruction from the voice signal of the user, the electronic device 100 may perform the operation corresponding to the voice instruction, for example, starting a WeChat application, and displaying a payment interface 730 of WeChat.

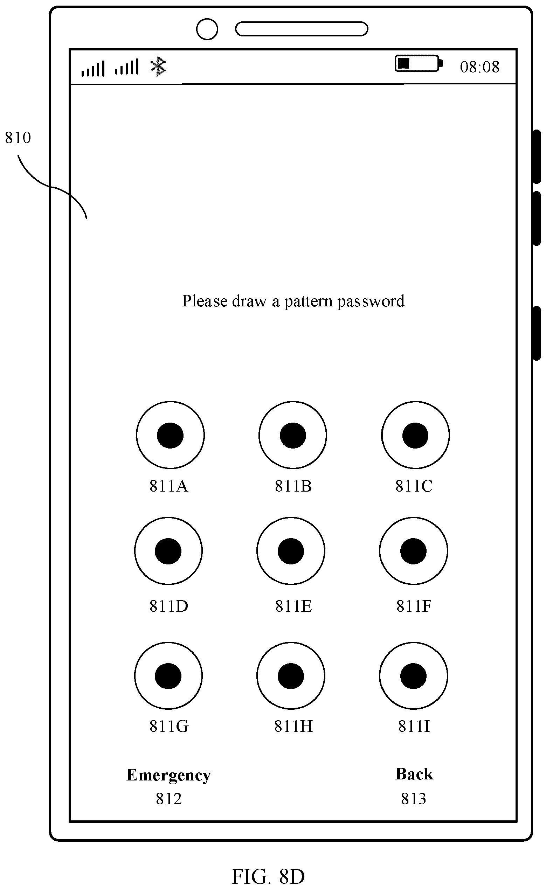

In the embodiments of this application, password authentication unlock may include text password unlock and pattern password unlock. For a text password unlock interface, refer to the password unlock interface 720 shown in FIG. 7C. A pattern password unlock interface may be a pattern unlock interface 810 shown in FIG. 8D.

As shown in FIG. 8D, the electronic device 100 displays the pattern unlock interface 810. The pattern unlock interface 810 includes a plurality of contact areas (for example, a contact area 811A, a contact area 811B, a contact area 811C, a contact area 811D, a contact area 811E, a contact area 811F, a contact area 811G, a contact area 811H, and a contact area 8111), an emergency call button 812, and an exit button 813. Each contact area may correspond to an identifier. For example, the contact area 811A may correspond to "1", the contact area 811B may correspond to "2", the contact area 811C may correspond to "3", the contact area 811D may correspond to "4", and the contact area 811E may correspond to "5", the contact area 811F may correspond to "6", the contact area 811G may correspond to "7", the contact area 811H may correspond to "8", and the contact area 8111 may correspond to "9".

The electronic device 100 may stitch, according to a passing sequence, the identifiers corresponding to the plurality of contact areas at which the user successively passes according to a finger sliding track, into a text password, and then match the text password with a stored text password. After the matching succeeds, the electronic device 100 may unlock the screen.

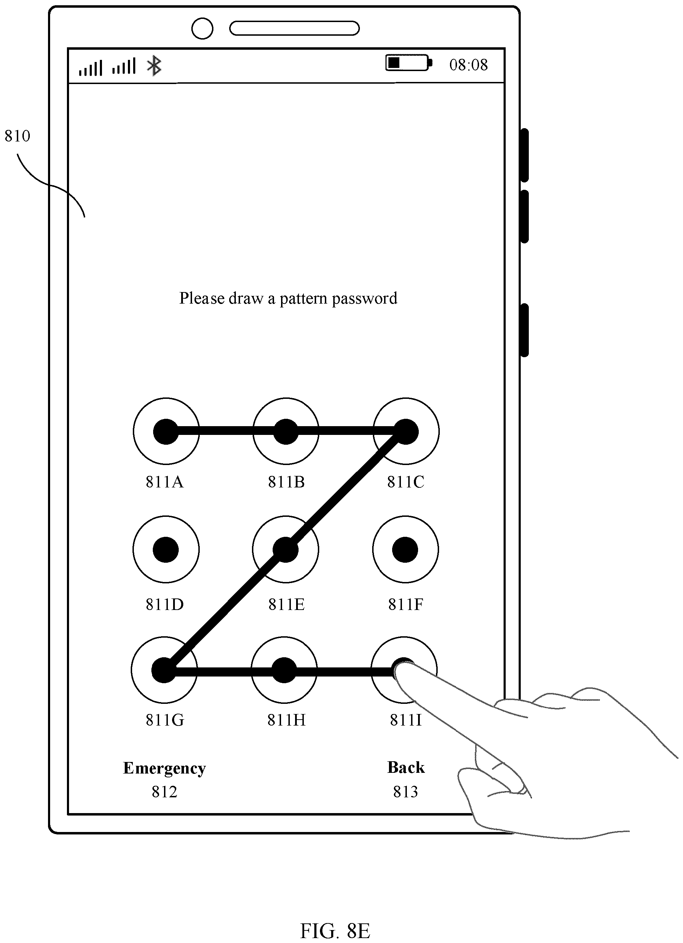

As shown in FIG. 8E, when the user successively passes the contact area 811A, the contact area 811B, the contact area 811C, the contact area 811E, the contact area 811G, the contact area 811H, and the contact area 811I according to the finger sliding track, the electronic device 100 may detect that a password text entered by the user is "1235789". If the stored text password is also "1235789", password authentication succeeds, and the electronic device 100 may unlock the screen.

It may be understood that, when the password authentication fails, the electronic device 100 may enter an authentication failure prompt to prompt the user to re-enter a password. The electronic device 100 may perform password authentication on the user again.

In the embodiments of this application, when the electronic device 100 runs the voice recognition application, the voice recognition application may detect a voice instruction in the background. After detecting the voice instruction and unlocking the screen, the electronic device 100 may perform an operation corresponding to the voice instruction. If no voice instruction is detected within a period of time (for example, 5 seconds), the electronic device 100 may close the voice recognition application in the background, so that the user is unaware of starting or closing of the voice recognition application.

In some application scenarios, when the electronic device 100 is in the screen-locked state, the electronic device 100 may detect a wake-up voice of the user. The wake-up voice includes a wake-up word (for example, "Xiaoyi Xiaoyi") that is used to request the electronic device 100 to trigger the voice recognition application to detect a voice instruction. For example, the electronic device starts the voice recognition application, or the electronic device has run the voice recognition application in the background, to trigger a function of detecting the voice instruction by the voice recognition application. When detecting the wake-up voice, the electronic device 100 may simultaneously trigger the voice recognition application to detect the voice instruction, and trigger authentication (for example, face authentication, fingerprint authentication, and password authentication) on the user. After detecting the voice instruction through the voice recognition application and the authentication succeeds, the electronic device 100 may unlock the screen and perform an operation (for example, displaying a payment interface of WeChat) corresponding to the voice instruction. In this way, in the screen-locked state, only by detecting the wake-up voice, the electronic device 100 may simultaneously trigger the voice recognition application to detect the voice instruction entered by the user, and trigger the authentication (for example, the face authentication, the fingerprint authentication, and the password authentication) on the user. After the authentication succeeds and the voice instruction is detected, the electronic device 100 may perform the operation corresponding to the voice instruction. This simplifies operation steps for voice control over a function or an application on the electronic device by the user, and reduces operation time of the user.

The following specifically describes the voice control method in this application scenario by using a face authentication manner as an example.

When the electronic device 100 is in the screen-locked state, and the user triggers, by using the wake-up voice, the voice recognition application to detect a voice instruction entered by the user next, the electronic device 100 may trigger face authentication. After the voice recognition application detects the voice instruction and the face authentication succeeds, the electronic device 100 may unlock the screen and perform an operation (for example, displaying a payment interface of WeChat) corresponding to the voice instruction. In this way, when the electronic device 100 is in the screen-locked state, a wake-up voice may simultaneously trigger the electronic device to recognize a voice instruction entered by the user next, and trigger face authentication unlock. This simplifies operation steps for voice control over the electronic device by the user, and reduces operation time of the user.

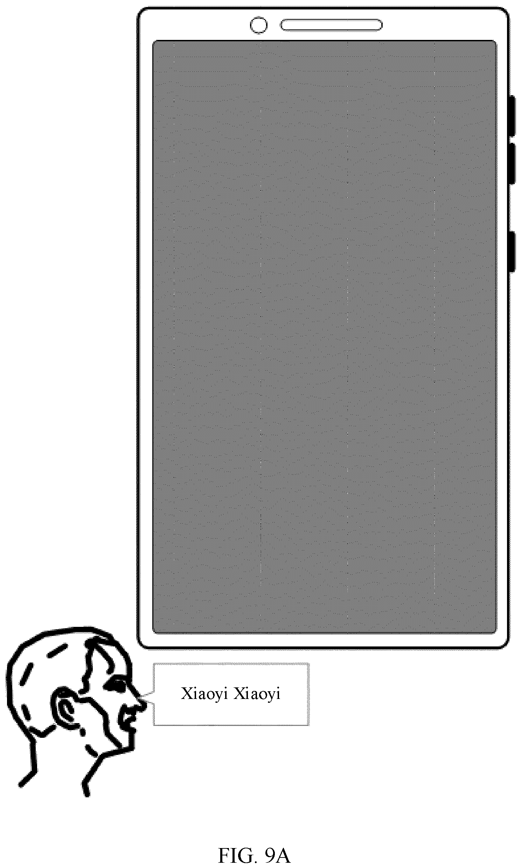

For example, as shown in FIG. 9A, the electronic device 100 is in a screen-off and screen-locked state.

When the electronic device 100 is in the screen-off and screen-locked state, the electronic device 100 may collect a wake-up voice of the user by using a microphone. After the electronic device 100 collects the wake-up voice of the user, the electronic device 100 may determine whether the wake-up voice includes a wake-up word (for example, "Xiaoyi Xiaoyi"). If the wake-up voice includes the wake-up word, the electronic device 100 may simultaneously trigger the voice recognition application to detect a voice instruction entered by the user next, and collect face information of the user. The electronic device 100 may collect the face information of the user by using a camera.

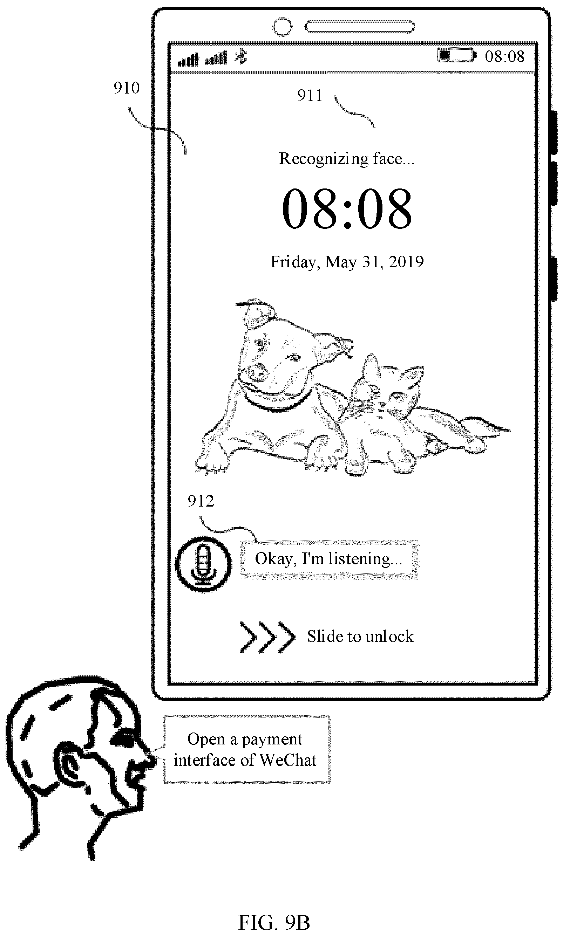

As shown in FIG. 9B, when detecting the wake-up voice, the electronic device 100 may continue to collect a voice signal of the user by using the microphone. In addition, the electronic device 100 simultaneously triggers the voice recognition application to detect a voice instruction in the voice signal of the user, and collect the face information. The electronic device 100 may collect the face information by using the camera, and when collecting face information, the electronic device 100 may turn on a screen to display a lock screen 910.

In a possible implementation, when the electronic device 100 collects the face information, the electronic device 100 may output a face recognition prompt 911 to prompt the user that face recognition is being performed. In specific implementation, the electronic device 100 may not display the face recognition prompt 911.

When the electronic device 100 is triggered to recognize the voice instruction, the electronic device 100 may output an enabling prompt to prompt the user to enter the voice instruction. The enabling prompt may be one or more of a text prompt, a voice prompt, or a mechanical vibration prompt. For example, the enabling prompt may be a text prompt 912 in FIG. 9B (for example, "Okay, I'm listening..."), and text content in the text prompt 912 is played via voice.

After collecting the face information, the electronic device 100 may match the collected face information with a stored face information template. After collecting the voice signal (for example, a voice signal including text information "Open a payment interface of WeChat") of the user, the electronic device 100 may detect the voice instruction (for example, displaying the payment interface of WeChat) in the voice signal of the user by using a voice recognition assistant.

In a possible implementation, the electronic device 100 may first detect the voice instruction in the voice signal of the user through the voice recognition application, and then determine that the processed face information matches a stored face information template. In this case, the electronic device 100 may unlock the screen and directly perform an operation corresponding to the voice instruction.

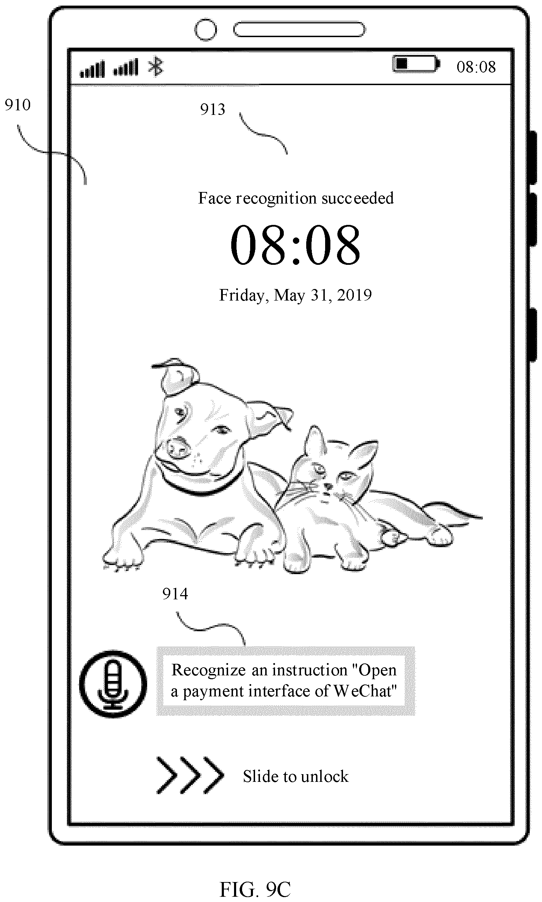

For example, as shown in FIG. 9C, the electronic device 100 first recognizes the voice instruction in the voice signal of the user, and then determines that the collected face information matches the stored face information template. After detecting the voice instruction through the voice recognition application, the electronic device 100 may output an instruction prompt 914 (for example, a text prompt "Recognize an instruction 'displaying a payment interface of WeChat‴). After determining that the processed face information matches the face information template, the electronic device 100 may output a face recognition success prompt 913.

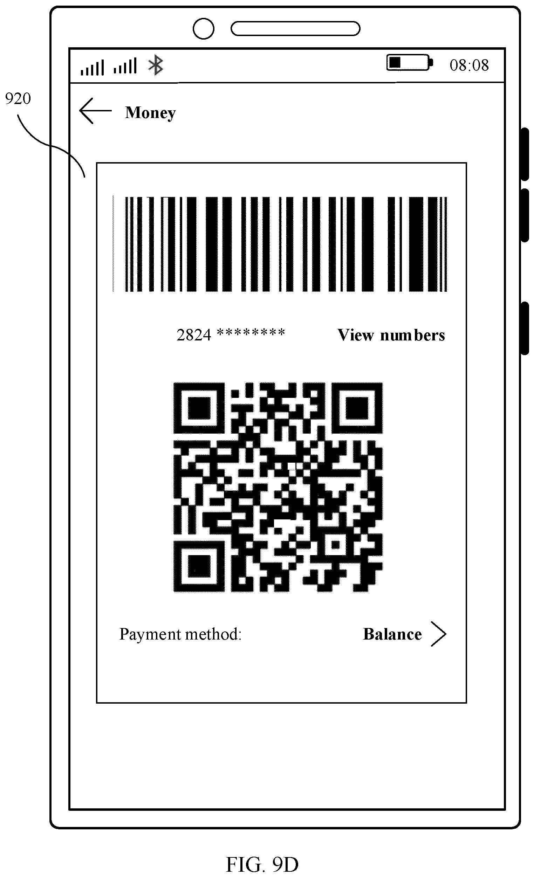

As shown in FIG. 9D, after the electronic device 100 outputs the face recognition success prompt 913 for a period of time (for example, 0.5 seconds), the electronic device may perform the operation corresponding to the voice instruction in the voice signal of the user, for example, displaying a payment interface 920 of WeChat.

In specific implementation, after recognizing the voice instruction, the electronic device 100 may not need to output the instruction prompt 914. After determining that the processed face information matches the stored face information template, the electronic device 100 may directly unlock the screen, and execute the voice instruction without outputting the face recognition success prompt shown in FIG. 9C. For example, the electronic device 100 directly unlocks the screen and displays the payment interface 920 of WeChat shown in FIG. 9D.

In a possible implementation, the electronic device 100 first determines that the processed face information matches the stored face information template, and then detects the voice instruction in the voice signal of the user through the voice recognition application. In this case, the electronic device 100 may first unlock the screen (for example, the electronic device 100 unlocks the screen and displays a home screen) when determining that the processed face information matches the stored face information template. After recognizing the voice instruction, the electronic device 100 may perform the operation corresponding to the voice instruction.

The following specifically describes the voice control method in this application scenario by using a fingerprint authentication manner as an example.

When the electronic device 100 is in the screen-locked state, and the user triggers, by using the wake-up voice, the voice recognition application to detect a voice instruction entered by the user next, the electronic device 100 may trigger the fingerprint authentication. After the voice recognition application detects the voice instruction and the fingerprint authentication succeeds, the electronic device 100 may unlock the screen and perform an operation (for example, displaying a payment interface of WeChat) corresponding to the voice instruction. In this way, in the screen-locked state, by using a wake-up voice, the electronic device 100 may simultaneously trigger the voice recognition application to detect a voice instruction entered by the user next, and trigger fingerprint authentication unlock. This simplifies operation steps for voice control over the electronic device by the user, and reduces operation time of the user.

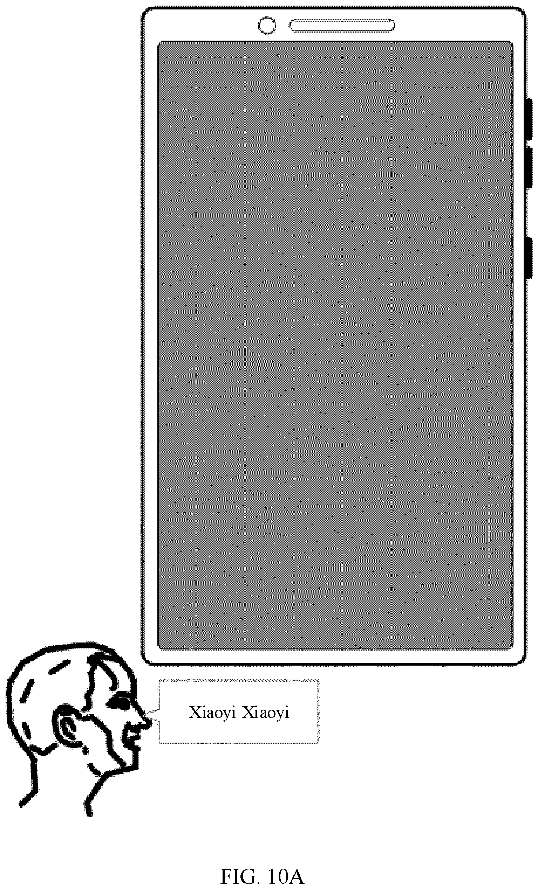

For example, as shown in FIG. 10A, the electronic device 100 is in a screen-off and screen-locked state.

When the electronic device 100 is in the screen-off and screen-locked state, the electronic device 100 may collect a wake-up voice of the user by using a microphone. After the electronic device 100 collects the wake-up voice of the user, the electronic device 100 may determine whether the wake-up voice includes a wake-up word (for example, "Xiaoyi Xiaoyi"). If the wake-up voice includes the wake-up word, the electronic device 100 may simultaneously trigger the voice recognition application to detect a voice instruction entered by the user next, and collect fingerprint information of the user. The electronic device 100 may collect the fingerprint information of the user by using an in-screen fingerprint collection module.

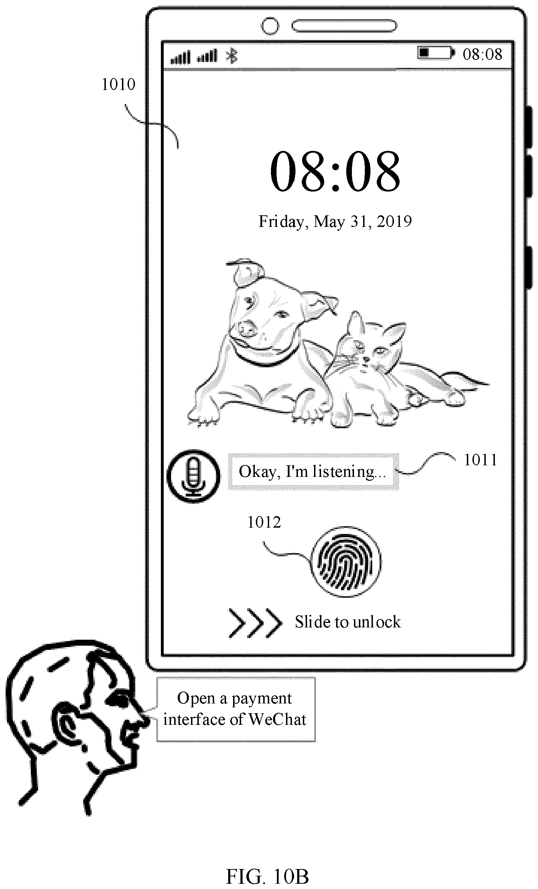

As shown in FIG. 10B, when detecting the wake-up voice, the electronic device 100 may continue to collect a voice signal of the user by using a microphone. In addition, the electronic device 100 simultaneously triggers the voice recognition application to detect and recognize a voice instruction in the voice signal of the user, and collect the fingerprint information of the user. When the fingerprint collection module is disposed below a touchscreen and coupled to the touchscreen, and is started to collect the fingerprint information of the user, the electronic device 100 may display a fingerprint recognition icon 1012 on a display to prompt the user to enter the fingerprint information.

In the embodiments of this application, the fingerprint collection module may also be disposed outside the electronic device 100. When the electronic device 100 determines that the voice signal of the user includes the wake-up word, the electronic device 100 may collect the fingerprint information of the user by using the external fingerprint recognition module. In this case, the fingerprint icon 1012 may not be displayed.

After starting the voice recognition application, the electronic device 100 may output an enabling prompt to prompt the user to enter a voice instruction. The enabling prompt may be one or more of a text prompt, a voice prompt, or a mechanical vibration prompt. For example, the enabling prompt may be a text prompt 1012 in FIG. 10B (for example, "Okay, I'm listening..."), and text content in the text prompt 1011 is played via voice.

In a possible implementation, the electronic device first detects the voice instruction in the voice signal of the user through the voice recognition application, and then determines that the collected fingerprint information matches a stored fingerprint information template. In this case, the electronic device 100 may unlock the screen and directly perform an operation corresponding to the voice instruction.

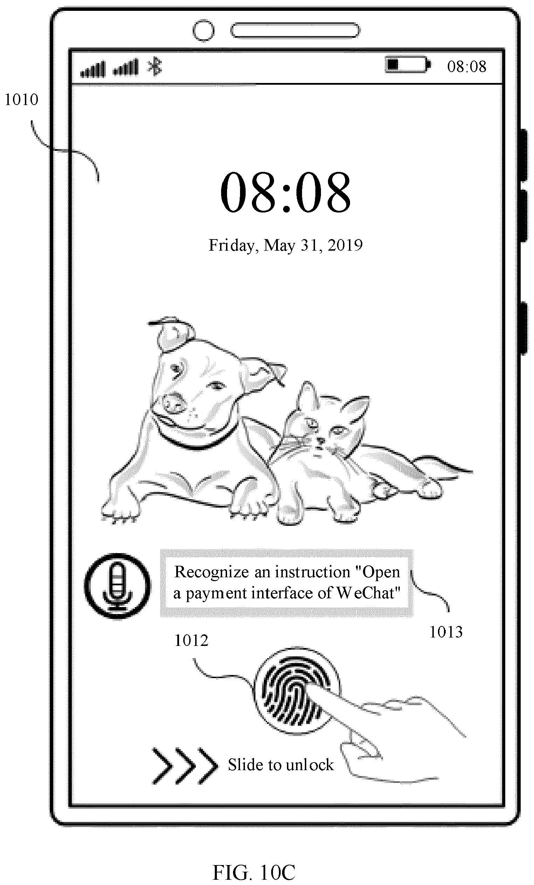

For example, as shown in FIG. 10C, the electronic device 100 first detects the voice instruction in the voice signal of the user through the voice recognition application, and then determines that the collected fingerprint information matches the stored face information template. After detecting the voice instruction, the electronic device 100 may output an instruction prompt 1013 (for example, a text prompt "Recognize an instruction 'displaying a payment interface of WeChat‴). When determining that the processed fingerprint information matches the stored fingerprint information template, the electronic device 100 may unlock the screen, and perform the operation corresponding to the voice instruction.

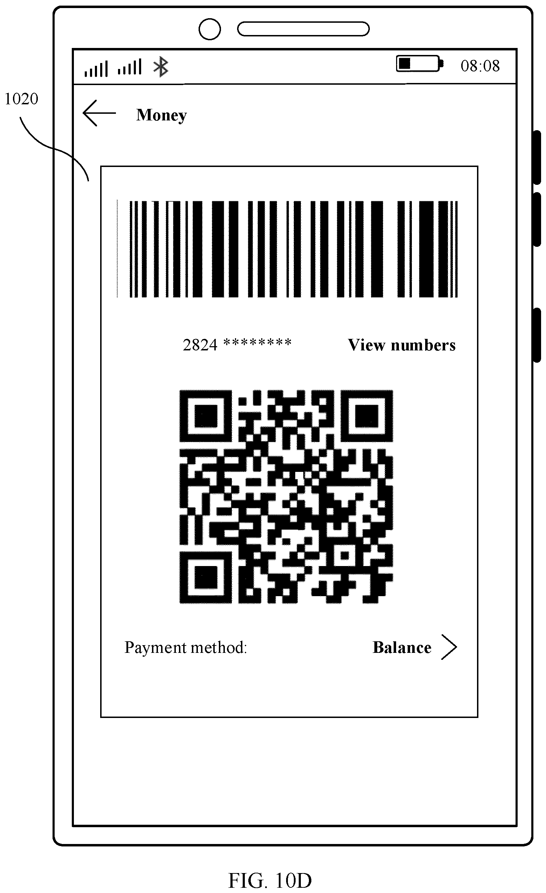

As shown in FIG. 10D, after determining that the collected fingerprint information matches the stored fingerprint information template, the electronic device 100 unlocks the screen and displays a payment interface 1020 of WeChat.

After recognizing the voice instruction, the electronic device 100 may not need to output the instruction prompt 1013.

In a possible implementation, the electronic device 100 first collects the fingerprint information of the user and determines that the collected fingerprint information matches the stored fingerprint information template, and then detects the voice instruction from the voice signal of the user through the voice recognition application. In this case, when determining that the collected fingerprint information matches the stored fingerprint information template, the electronic device 100 may unlock the screen (for example, the electronic device 100 unlocks the screen and displays a home screen). After detecting the voice instruction from the voice signal of the user through the voice recognition application, and the electronic device 100 performs the operation corresponding to the voice instruction.

The following specifically describes the voice control method in this application scenario by using a password authentication manner as an example.

When the electronic device 100 is in the screen-locked state, and the user triggers, by using the wake-up voice, the voice recognition application to detect a voice instruction entered by the user next, the electronic device 100 may trigger the password authentication. After the voice recognition application detects the voice instruction and the password authentication succeeds, the electronic device 100 may unlock the screen and perform an operation (for example, display a payment interface of WeChat) corresponding to the voice instruction. In this way, in the screen-locked state, by using a wake-up voice, the electronic device 100 may simultaneously trigger the voice recognition application to detect a voice instruction entered by the user next, and trigger password authentication unlock. This simplifies operation steps for voice control over the electronic device by the user, and reduces operation time of the user.

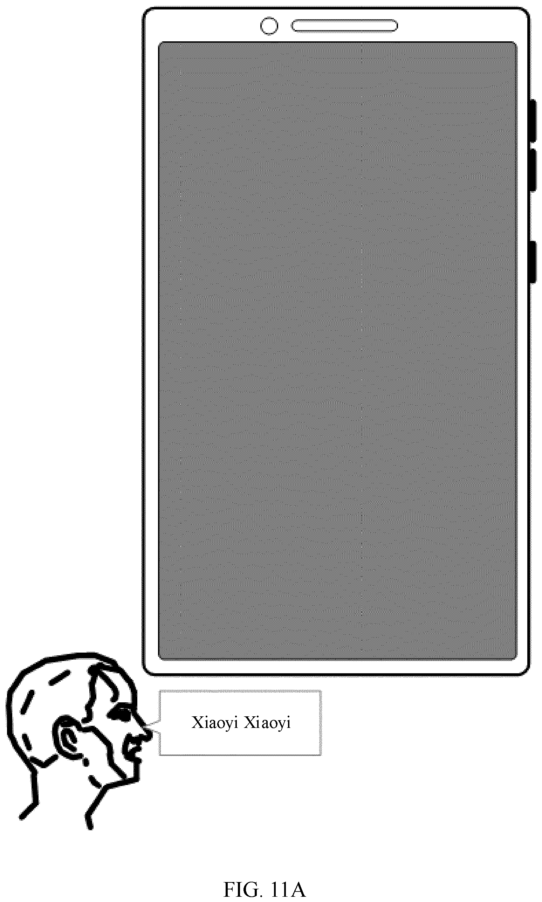

For example, as shown in FIG. 11A, the electronic device 100 is in a screen-off and screen-locked state.

When the electronic device 100 is in the screen-off and screen-locked state, the electronic device 100 may collect a wake-up voice of the user by using a microphone. After the electronic device 100 collects the wake-up voice of the user, the electronic device 100 may determine whether the wake-up voice includes a wake-up word (for example, "Xiaoyi Xiaoyi"). If the wake-up voice includes the wake-up word, the electronic device 100 may simultaneously trigger the voice recognition application to detect a voice instruction entered by the user next, and display a password unlock interface 1110.

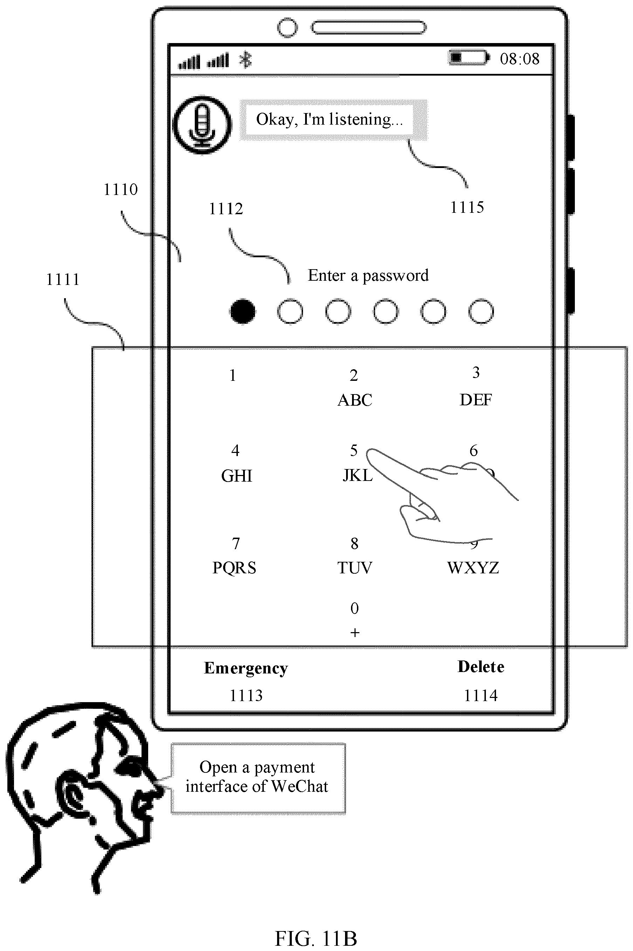

As shown in FIG. 11B, the password unlock interface 1110 may include a virtual numeric keypad 1111, a password input box 1112, an emergency call button 1113, and a delete button 1114. The virtual numeric keypad 1111 is used to receive an input of the user, to fill a password in the password input box 1112. The password input box 1112 is used to prompt the user to enter a password with a specified quantity of characters (for example, 6 characters). Each time the user enters a character, the password input box 722 prompts that the user has entered one character. After the user has entered the password with the specified quantity of characters, the electronic device 100 may determine whether the password with the specified quantity of characters that is entered by the user matches a stored password template. When the matching succeeds, the electronic device 100 successfully unlocks the screen.

When detecting the wake-up voice, the electronic device 100 may continue to collect a voice signal of the user by using the microphone, and trigger the voice recognition application to detect a voice instruction in the voice signal of the user.

After starting the voice recognition application, the electronic device 100 may output an enabling prompt to prompt the user to enter a voice instruction. The enabling prompt may be one or more of a text prompt, a voice prompt, or a mechanical vibration prompt. For example, the enabling prompt may be a text prompt 1115 in FIG. 11B (for example, "Okay, I'm listening..."), and text content in the text prompt 1115 is played via voice.

In a possible implementation, the electronic device 100 may first detect the voice instruction from the voice signal of the user through the voice recognition application, and then determine that the password entered by the user matches a stored password template. In this case, the electronic device 100 may unlock the screen and perform an operation corresponding to the voice instruction.

For example, as shown in FIG. 11B, when displaying the password unlock interface 1110, the electronic device 100 may collect the voice signal of the user by using the microphone, for example, a voice signal including text information "Open a payment interface of WeChat". When collecting the voice signal of the user, the electronic device 100 may detect the voice instruction in the voice signal of the user through the voice recognition application.

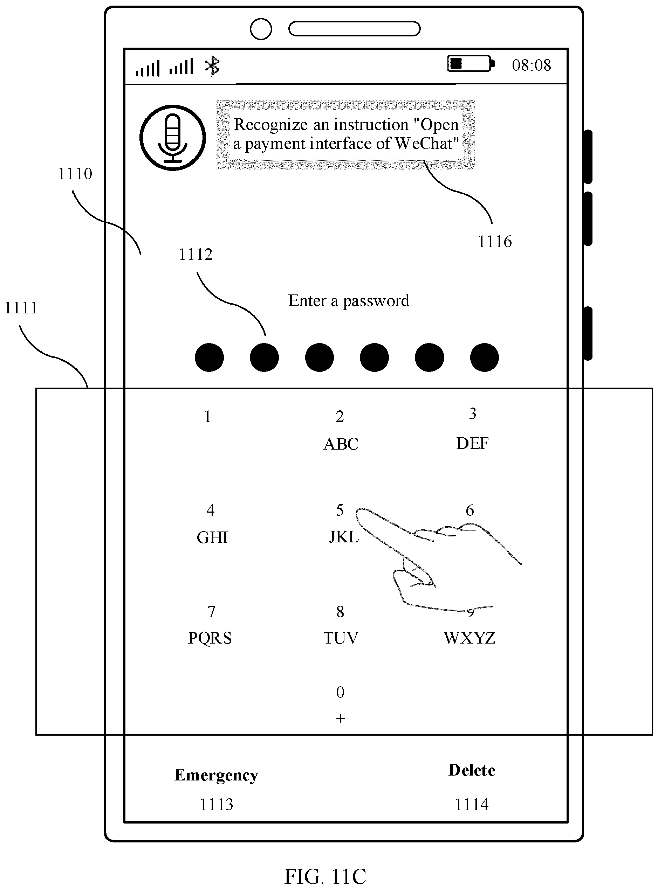

As shown in FIG. 11C, when the electronic device 100 detects the voice instruction from the voice signal of the user through the voice recognition application, the electronic device 100 may output an instruction prompt 1116, for example, a text prompt "Recognize an instruction 'displaying a payment interface of WeChat‴. The electronic device 100 may first recognize the voice instruction from the voice signal of the user, and then receive the password with the specified quantity of characters that is entered by the user. The electronic device 100 may determine whether the password with the specified quantity of characters that is entered by the user matches the stored password template. If the password with the specified quantity of characters that is entered by the user matches the stored password template, the electronic device 100 may unlock the screen and perform an operation (for example, displaying the payment interface of WeChat) corresponding to the voice instruction.

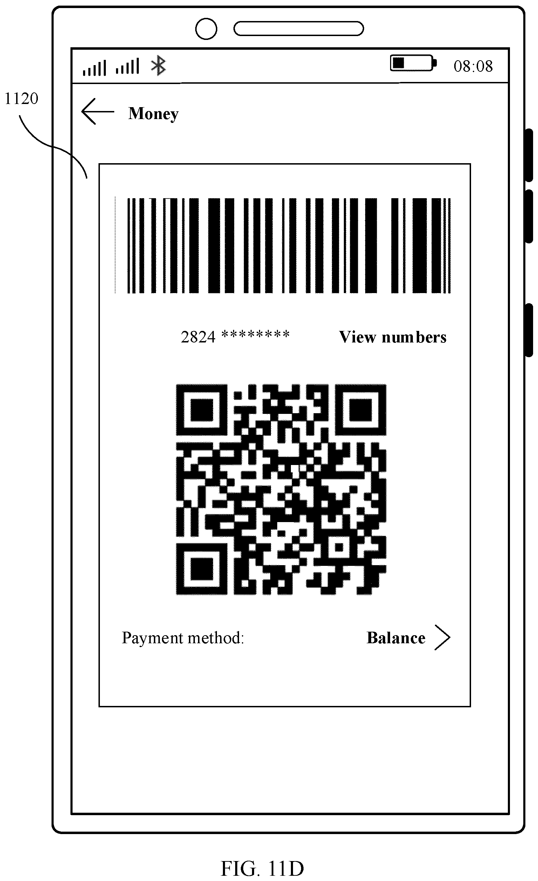

As shown in FIG. 11D, after the electronic device 100 recognizes, from the voice signal of the user, that the voice instruction is "displaying the payment interface of WeChat", and determines that the password with the specified quantity of characters that is entered by the user matches the stored password template, the electronic device 100 may unlock the screen and display a payment interface 1120 of WeChat.

In a possible implementation, after the electronic device 100 first receives the password with the specified quantity of characters that has been entered by the user and determines that the password with the specified quantity of characters that is entered by the user matches the stored password template, the electronic device 100 detects the voice instruction (for example, "displaying the payment interface of WeChat") from the voice signal of the user through the voice recognition application. In this case, the electronic device 100 may unlock the screen (for example, the electronic device 100 unlocks the screen and displays a home screen) when determining that the password with the specified quantity of characters that is entered by the user matches the stored password template. After detecting the voice instruction from the voice signal of the user through the voice recognition application, the electronic device 100 performs the operation (for example, "displaying the payment interface of WeChat") corresponding to the voice instruction.

The password authentication unlock may include text password unlock and pattern password unlock. For content of the pattern password unlock, refer to the foregoing embodiments. Details are not described herein again.

In the embodiments of this application, while triggering the voice recognition application to detect the voice instruction, the electronic device 100 may trigger a plurality of types of identity authentication, for example, trigger both face authentication and fingerprint authentication by using the wake-up voice entered by the user. This is not limited to this. When waking up a voice assistant by using the wake-up word entered by the user, the electronic device 100 may further trigger both face authentication and password authentication, or trigger both fingerprint authentication and password authentication, or trigger all of face authentication, fingerprint unlock, and password authentication. When the plurality of types of identity authentication are triggered, if any identity authentication succeeds, the electronic device 100 may unlock the screen and perform the operation corresponding to the voice instruction recognized from the voice signal of the user.

When the electronic device 100 is provided with a plurality of unlock methods (for example, face authentication unlock, fingerprint authentication unlock, and password authentication unlock), the electronic device 100 may preferentially trigger the face authentication unlock and the fingerprint authentication unlock, and then trigger the password authentication unlock (for example, text password authentication unlock or pattern password unlock) when authentication fails.

In some application scenarios, when the electronic device 100 is in the screen-locked state, the electronic device 100 may detect a voice signal of the user. The voice signal of the user may include a wake-up word that is used by the electronic device 100 to trigger the voice recognition application to detect a voice instruction. The wake-up word corresponds to a voice instruction. When detecting the wake-up word from the voice signal, the electronic device 100 simultaneously triggers the voice recognition application to detect the voice instruction in the voice signal, and triggers authentication (for example, face authentication, fingerprint authentication, and password authentication) on the user. When the electronic device 100 detects the voice instruction and the authentication succeeds, the electronic device 100 may perform an operation (for example, displaying a payment interface of WeChat) corresponding to the voice instruction. In this way, in the screen-locked state, when the electronic device 100 receives the voice signal that includes the wake-up word and that is also the voice instruction, by using the wake-up word in the voice signal, the electronic device 100 simultaneously triggers the voice recognition application to recognize the voice instruction and triggers the authentication on the user, and executes the voice instruction after the authentication succeeds. This simplifies operation steps for voice control over the electronic device by the user, and reduces operation time of the user.

The following specifically describes the voice control method in this application scenario by using a face authentication manner as an example.

When the electronic device 100 is in the screen-locked state, the electronic device 100 may receive a voice signal of the user, where the voice signal of the user includes a preset wake-up word, and the preset wake-up word also corresponds to a voice instruction. When the electronic device 100 receives the voice signal of the user, the electronic device 100 may determine whether the voice signal of the user includes the preset wake-up word. If the voice signal of the user includes the preset wake-up word, the electronic device 100 may simultaneously trigger the voice recognition application to detect a voice instruction in the voice signal, and trigger face unlock. After the face unlock succeeds, the electronic device 100 may execute the voice instruction.

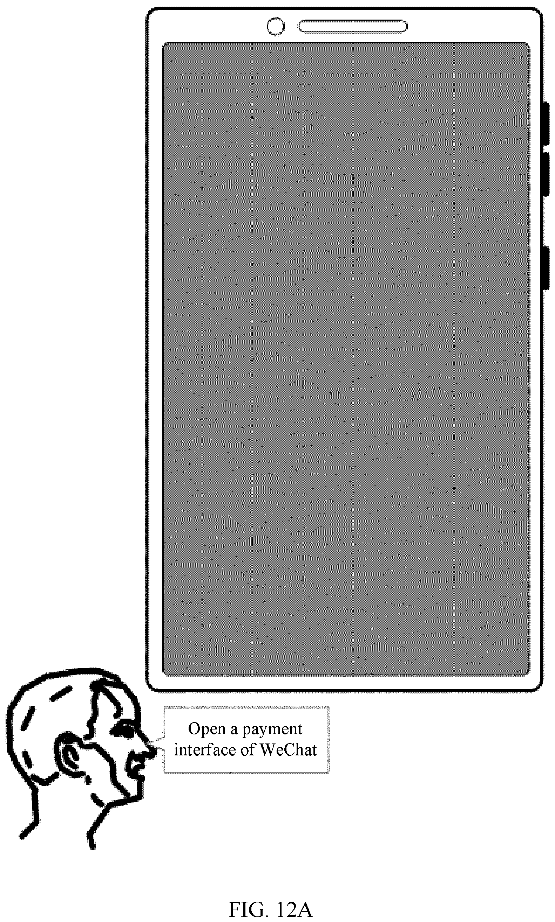

For example, as shown in FIG. 12A, the electronic device 100 is in a screen-off and screen-locked state.

When the electronic device 100 is in the screen-off and screen-locked state, the electronic device 100 may collect a voice signal (for example, the voice signal includes text information "Open a payment interface of WeChat") of the user by using a microphone. After the electronic device 100 collects the voice signal of the user, the electronic device 100 may determine whether the voice signal of the user includes the preset wake-up word (for example, "WeChat payment"). If the voice signal of the user includes the preset wake-up word, the electronic device 100 may simultaneously trigger the voice recognition application to detect the voice instruction in the voice signal, and collect face information of the user.

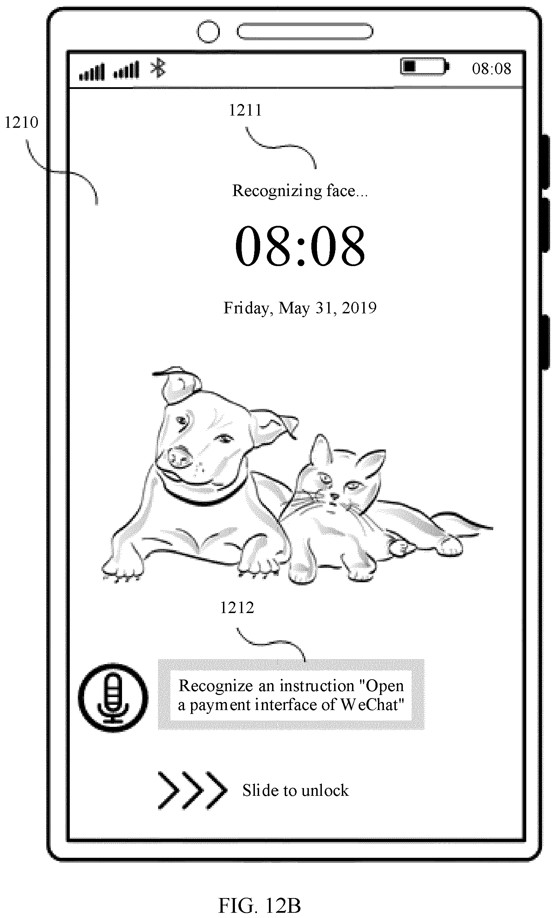

As shown in FIG. 12B, when determining that the voice signal of the user includes the preset wake-up word, the electronic device 100 triggers the voice recognition application to detect the voice instruction in the voice signal of the user. At the same time, the electronic device 100 may turn on a screen to display a lock screen 1210, and collect the face information.

In a possible implementation, when the electronic device 100 collects the face information, the electronic device 100 may output a face recognition prompt 1211 to prompt the user that face recognition is being performed. After collecting the face information, the electronic device 100 may match the face information with a stored face information template. In specific implementation, after enabling a face recognition module, the electronic device 100 may not output the face recognition prompt 1211.

After recognizing the voice instruction, the electronic device 100 may output an instruction prompt 1212 (for example, a text prompt "Recognize an instruction 'displaying a payment interface of WeChat‴). In specific implementation, the electronic device 100 may not display the instruction prompt 1212.

In a possible implementation, the electronic device 100 may first recognize the voice instruction in the voice signal of the user, and then determine that the processed face information matches the stored face information template. In this case, the electronic device 100 may unlock the screen and directly perform an operation corresponding to the voice instruction.

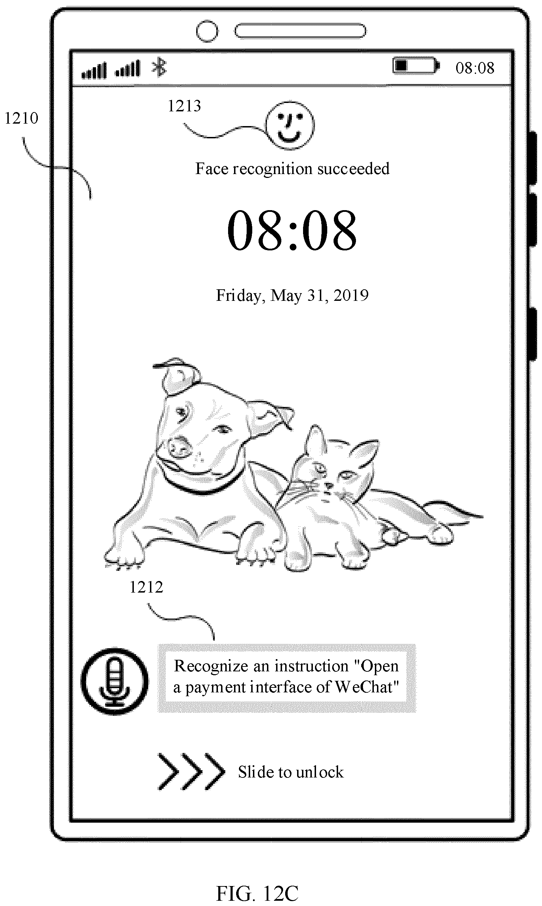

For example, as shown in FIG. 12C, after determining that the processed face information matches the face information template, the electronic device 100 may output a face recognition success prompt 1213.

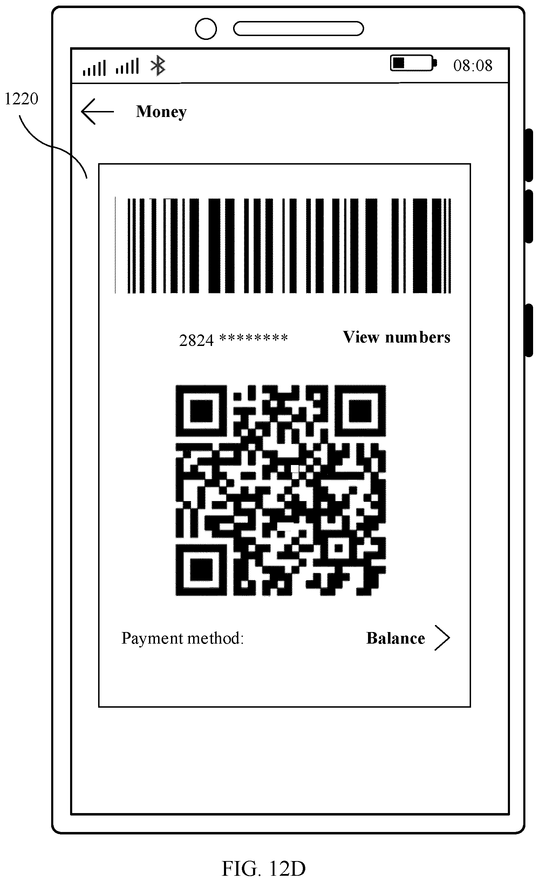

As shown in FIG. 12D, after the electronic device 100 outputs the face recognition success prompt 1213 for a period of time (for example, 0.5 seconds), the electronic device may execute the voice instruction in the voice signal of the user, for example, displaying a payment interface 1230 of WeChat.

In specific implementation, after recognizing the voice instruction, the electronic device 100 may not output the instruction prompt 1212, and may directly unlock the screen and perform an operation corresponding to the voice instruction after face recognition succeeds. After determining that the processed face information matches the stored face information template, the electronic device 100 may not output the face recognition success prompt 1213 shown in FIG. 12C, but may directly unlock the screen and perform the operation corresponding to the voice instruction. For example, the screen directly unlocks the screen and displays the payment interface 1220 of WeChat shown in FIG. 12D.

The following specifically describes the voice control method in this application scenario by using a fingerprint authentication manner as an example.

In some embodiments, when the electronic device 100 is in the screen-locked state, the electronic device 100 may receive a voice signal of the user, where the voice signal of the user includes a preset wake-up word, and the preset wake-up word also corresponds to a voice instruction. When the electronic device 100 receives the voice signal of the user, the electronic device 100 may determine whether the voice signal of the user includes the preset wake-up word. If the voice signal of the user includes the preset wake-up word, the electronic device 100 may simultaneously trigger the voice recognition application to detect a voice instruction in the voice signal, and trigger fingerprint unlock. After the fingerprint unlock succeeds, the electronic device 100 may execute the voice instruction.

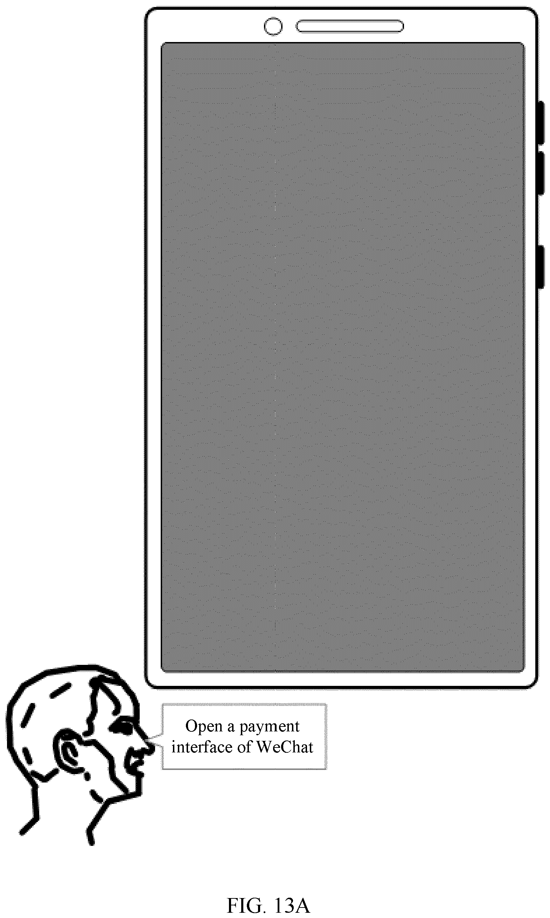

For example, as shown in FIG. 13A, the electronic device 100 is in a screen-off and screen-locked state.

When the electronic device 100 is in the screen-off and screen-locked state, the electronic device 100 may collect a voice signal (for example, the voice signal includes text information "Open a payment interface of WeChat") of the user by using a microphone. After the electronic device 100 collects the voice signal of the user, the electronic device 100 may determine whether the voice signal of the user includes the preset wake-up word (for example, "WeChat payment"). If the voice signal of the user includes the preset wake-up word, the electronic device 100 may simultaneously trigger the voice recognition application to detect the voice instruction in the voice signal of the user, and collect fingerprint information of the user.

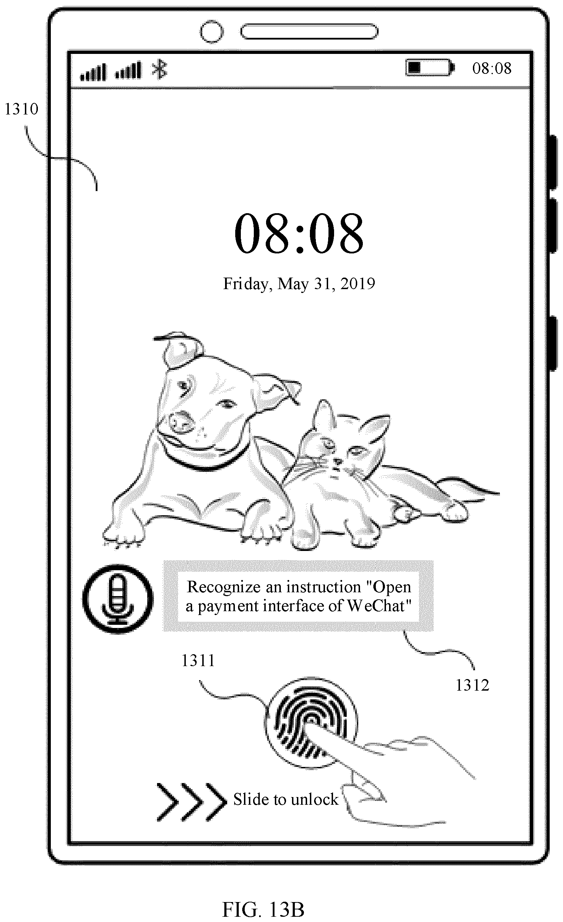

For example, as shown in FIG. 13B, when determining that the voice signal of the user includes the wake-up word, the electronic device 100 triggers the voice recognition application to detect the voice instruction in the voice signal of the user. At the same time, the electronic device 100 may turn on a screen to display a lock screen 1310, and collect fingerprint information of the user. If a fingerprint collection module is disposed below a touchscreen and coupled to the touchscreen, after the fingerprint collection module is started, the electronic device 100 may output a fingerprint recognition icon 1311 to prompt the user to enter fingerprint information. After collecting the fingerprint information, the electronic device 100 may match the collected fingerprint information with a stored fingerprint information template.

In the embodiments of this application, the fingerprint collection module may also be disposed outside the electronic device 100. When the electronic device 100 determines that the voice signal of the user includes the wake-up word, the electronic device 100 may collect the fingerprint information of the user by using the external fingerprint collection module. In this case, the fingerprint recognition icon 1311 may not be displayed.

In a possible implementation, the electronic device 100 may first detect the voice instruction in the voice signal of the user, and then determine that the processed fingerprint information matches the stored fingerprint information template. In this case, the electronic device 100 may directly unlock the screen and perform an operation (for example, displaying the payment interface of WeChat) corresponding to the voice instruction.

For example, as shown in FIG. 13B, after the electronic device 100 detects the voice instruction through the voice recognition application, the electronic device 100 may output an instruction prompt 1312 (for example, a text prompt "Recognize an instruction 'displaying a payment interface of WeChat‴). After the voice recognition application detects the voice instruction, the electronic device 100 may collect the fingerprint information of the user. In specific implementation, after the voice recognition application detects the voice instruction, the electronic device 100 may not output the instruction prompt 1312, and may directly unlock the screen and execute the voice instruction after fingerprint recognition succeeds.

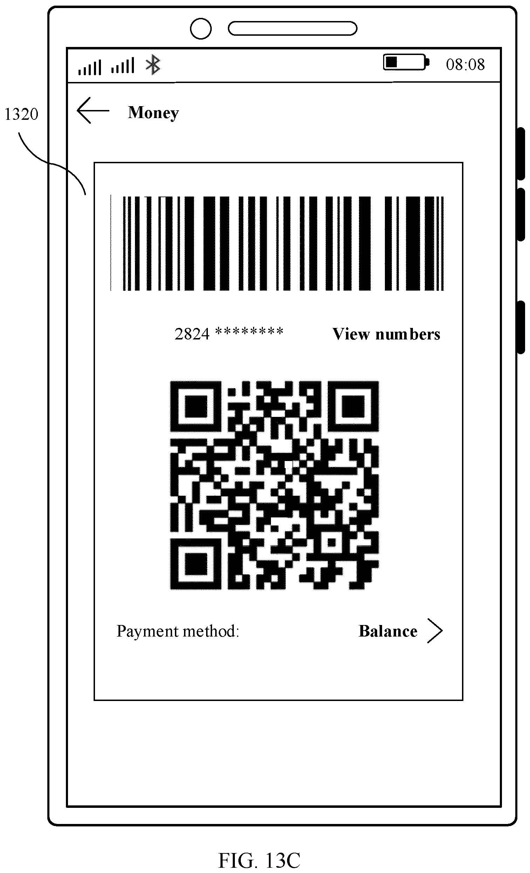

As shown in FIG. 13C, after determining that the collected fingerprint information matches the stored fingerprint information template, the electronic device 100 may unlock the screen and perform the operation corresponding to the voice instruction in the voice signal of the user, for example, displaying a payment interface of WeChat 1320.

The following specifically describes the voice control method in this application scenario by using a face authentication manner as an example.

When the electronic device 100 is in the screen-locked state, the electronic device 100 may receive a voice signal of the user, where the voice signal of the user includes a preset wake-up word, and the preset wake-up word also corresponds to a voice instruction. When the electronic device 100 receives the voice signal of the user, the electronic device 100 may determine whether the voice signal of the user includes the preset wake-up word. If the voice signal of the user includes the preset wake-up word, the electronic device 100 may simultaneously trigger the voice recognition application to detect the voice instruction in the voice signal of the user, and trigger displaying of a password unlock interface. After the user enters a password and successfully unlocks the electronic device 100, the electronic device 100 may execute the voice instruction.

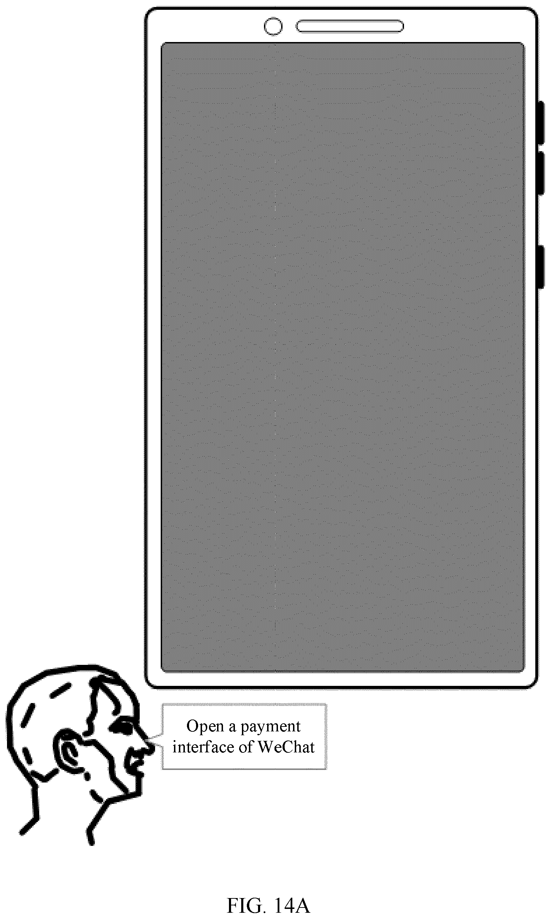

For example, as shown in FIG. 14A, the electronic device 100 is in a screen-off and screen-locked state.

When the electronic device 100 is in the screen-off and screen-locked state, the electronic device 100 may collect a voice signal (for example, the voice signal includes text information "Open a payment interface of WeChat") of the user by using a microphone. After the electronic device 100 collects the voice signal of the user, the electronic device 100 may determine whether the voice signal of the user includes a preset wake-up word (for example, "WeChat payment"). If the voice signal of the user includes the preset wake-up word, the electronic device 100 may simultaneously trigger the voice recognition application to detect a voice instruction in the voice signal, and display a password unlock interface.

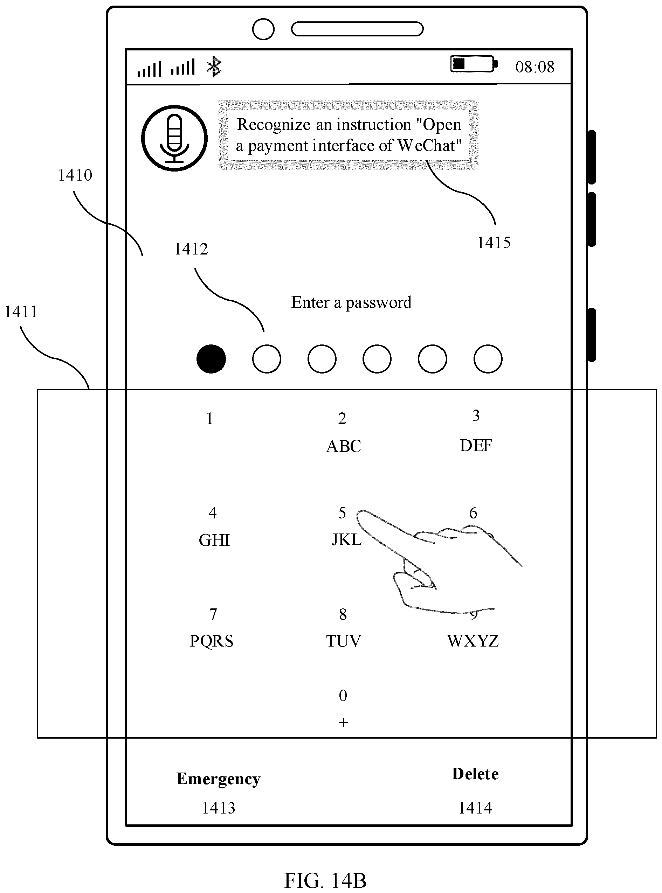

As shown in FIG. 14B, when determining that the voice signal of the user includes the preset wake-up word, the electronic device 100 may trigger the voice recognition application to detect the voice instruction in the voice signal of the user. At the same time, the electronic device 100 may turn on a screen to display an unlock interface 1410. The password unlock interface 1410 may include a virtual numeric keypad 1411, a password input box 1412, an emergency call button 1413, and a delete button 1414. The virtual numeric keypad 1411 is used to receive an input of the user, to fill a password in the password input box 1412. The password input box 1412 is used to prompt the user to enter a password with a specified quantity of characters (for example, 6 characters). Each time the user enters a character, the password input box 1412 prompts that the user has entered one character. After the user has entered the password with the specified quantity of characters, the electronic device 100 may determine whether the password with the specified quantity of characters that is entered by the user matches a stored password template. When the matching succeeds, the electronic device 100 successfully unlocks the screen.

After the electronic device 100 detects the voice instruction in the voice signal of the user through the voice recognition application, the electronic device 100 determines that the processed face information successfully matches the stored face information template, so that the electronic device 100 can unlock the screen and perform an operation corresponding to the voice instruction.

In a possible implementation, after the voice recognition application detects the voice instruction, the electronic device 100 may output an instruction prompt 1415 (for example, a text prompt "Recognize an instruction 'displaying a payment interface of WeChat‴).

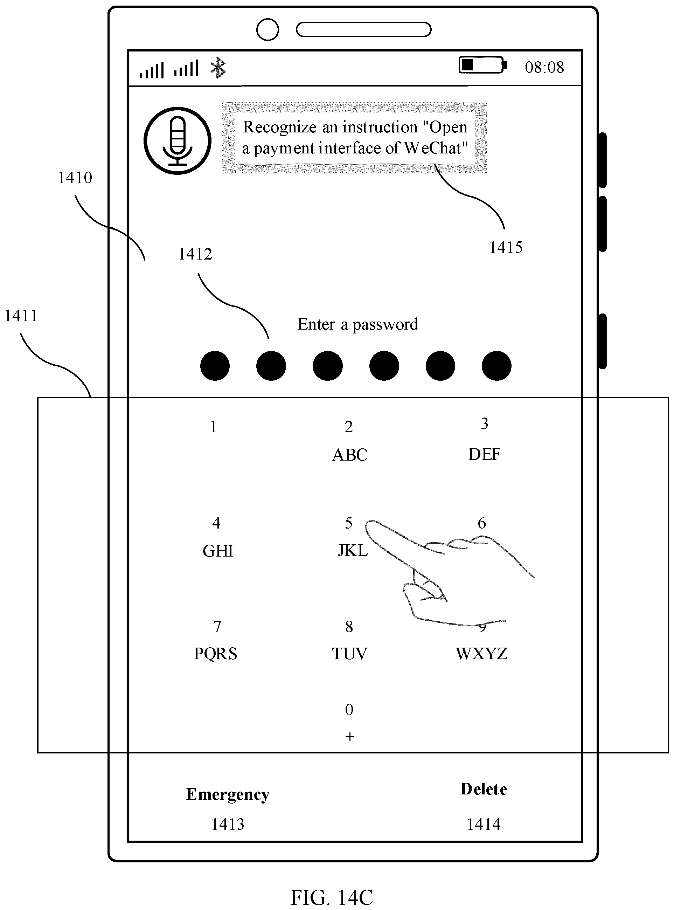

As shown in FIG. 14C, only after the electronic device 100 detects the voice instruction (for example, displaying the payment interface of WeChat), the electronic device 100 receives the password with the specified quantity of characters that has been entered by the user. The electronic device 100 may determine whether the password with the specified quantity of characters that is entered by the user matches the stored password template. If the password with the specified quantity of characters that is entered by the user matches the stored password template, the electronic device 100 may unlock the screen and perform the operation corresponding to the voice instruction.

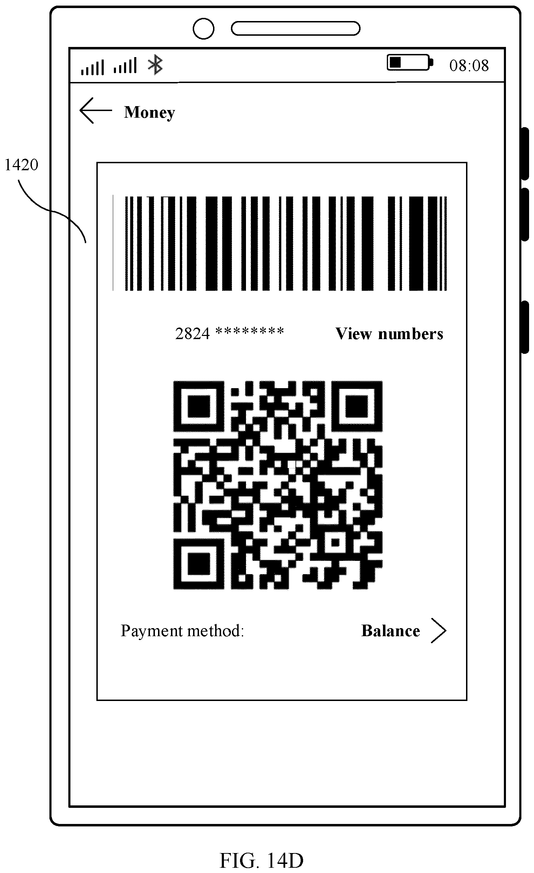

As shown in FIG. 14D, after the electronic device 100 detects that the voice instruction is "displaying the payment interface of WeChat", and determines that the password with the specified quantity of characters that is entered by the user matches the stored password template, the electronic device 100 may unlock the screen and display a payment interface 1420 of WeChat.

In specific implementation, after detecting the voice instruction, the electronic device 100 may not output the instruction prompt 1415, and may directly unlock the screen and execute the voice instruction after password matching succeeds.

The password authentication unlock may include text password unlock and pattern password unlock. For content of the pattern password unlock, refer to the foregoing embodiments. Details are not described herein again.

In this embodiment of this application, the electronic device 100 may trigger a plurality of types of identity authentication unlock, for example, trigger both face authentication unlock and fingerprint authentication unlock by using a voice signal that is entered by the user and that includes both a wake-up word and a voice instruction. This is not limited to this. When waking up a voice assistant by using the wake-up word entered by the user, the electronic device 100 may further trigger face authentication unlock and password authentication unlock at the same time, or trigger fingerprint authentication unlock and password authentication unlock at the same time, or trigger face authentication unlock, fingerprint unlock, and password authentication unlock at the same time. When the plurality of types of identity authentication unlock are triggered, if any identity authentication unlock succeeds, the electronic device 100 may perform an operation corresponding to the voice instruction.

When the electronic device 100 is provided with a plurality of unlock methods (for example, face authentication unlock, fingerprint authentication unlock, and password authentication unlock), the electronic device 100 may preferentially trigger the face authentication unlock and the fingerprint authentication unlock, and then trigger the password authentication unlock (for example, text password authentication unlock or pattern password unlock) when authentication fails.

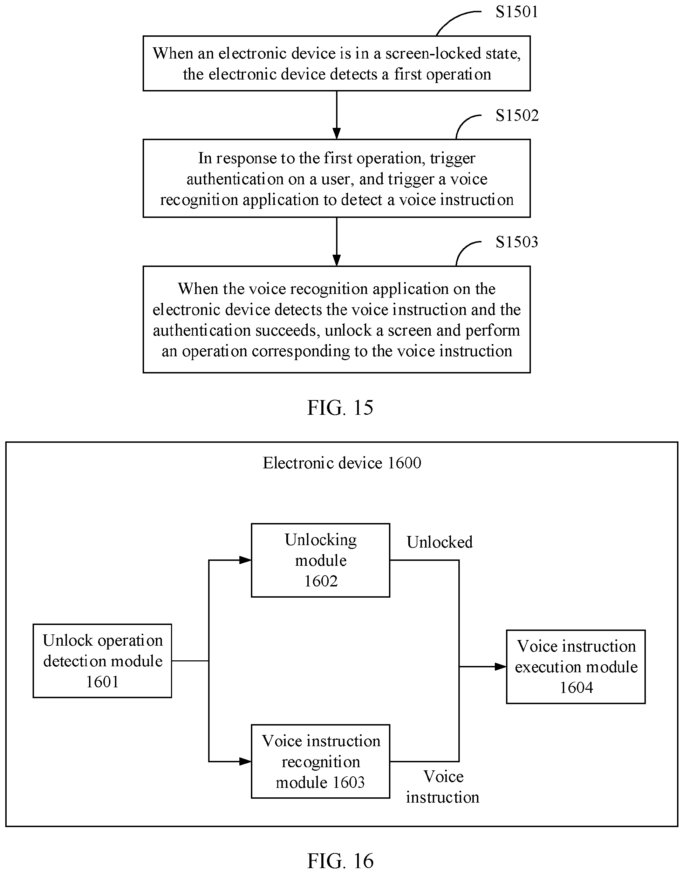

FIG. 15 shows a voice control method according to an embodiment of this application. The method includes the following steps.

S1501: When an electronic device is in a screen-locked state, the electronic device detects a first operation.

S1502: In response to the first operation, the electronic device triggers authentication on a user, and triggers a voice recognition application to detect a voice instruction.

In response to the first operation, the electronic device may simultaneously trigger the authentication on the user and trigger the voice recognition application to detect the voice instruction. For example, when detecting a lifting operation of the user, the electronic device triggers face authentication on the user. At the same time, when detecting the lifting operation of the user, the electronic device triggers the voice recognition application to detect the voice instruction entered by the user. For example, the first operation may be the lifting operation in the embodiment shown in FIG. 3B. For specific content, refer to other embodiments. Details are not described herein again.

The electronic device may trigger the authentication on the user in response to the first operation. When the electronic device detects that the authentication on the user is started, the electronic device may trigger the voice recognition application to detect the voice instruction. For example, when detecting the lifting operation of the user, the electronic device triggers face authentication on the user. After the electronic device detects that face recognition is started, the electronic device may trigger the voice recognition application to detect the voice instruction entered by the user. For example, the first operation may be a pressing operation on the power button 501 in the embodiment shown in FIG. 5A. For specific content, refer to other embodiments. Details are not described herein again.

The electronic device may trigger the authentication on the user in response to the first operation. When the authentication succeeds, the electronic device unlocks a screen and triggers the voice recognition application to detect the voice instruction entered by the user. For example, when detecting the lifting operation of the user, the electronic device triggers face authentication on the user. After the electronic device succeeds in the face authentication on the user, the electronic device may trigger the voice recognition application to detect the voice instruction entered by the user. For example, the first operation may be a sliding operation on the unlock triggering area 711 in the embodiment shown in FIG. 7B.

S1503: When the voice recognition application of the electronic device detects the voice instruction and the authentication succeeds, the electronic device unlocks the screen and executes an operation corresponding to the voice instruction.

In a possible implementation, when no voice instruction is detected within specified time (for example, 5 seconds) after the electronic device triggers the voice recognition application to detect the voice instruction, the electronic device may close the voice recognition application. The electronic device may run and close the voice recognition application in the background, so that the user is unaware of the starting and closing of the voice recognition application.

In a possible implementation, when the electronic device fails in the authentication on the user, the electronic device outputs a first prompt to prompt the user to trigger the electronic device to perform authentication on the user again. The user may enter authentication information again, and the electronic device may authenticate the authentication information entered by the user again. When the electronic device succeeds in the authentication on the user, the electronic device may perform the operation corresponding to the voice instruction. In this way, when the user enters incorrect authentication information, the user may be prompted to enter authentication information again, and this increases fault tolerance of a user input operation.

In some embodiments, the first operation may include a wake-up voice including a preset wake-up word. In response to detecting the wake-up voice including the preset wake-up word, the electronic device may trigger the authentication on the user, and trigger the voice recognition application to detect the voice instruction. For example, the wake-up word of the user may be "Xiaoyi Xiaoyi" in the embodiment shown in FIG. 9A, FIG. 10A, or FIG. 11A. The authentication manner includes face authentication, fingerprint authentication, and password authentication. The authentication manner is not limited to the foregoing manners, and may alternatively be voiceprint authentication, or the like. For more details, refer to the foregoing embodiments. Details are not described herein again.

In some embodiments, when the electronic device is in the screen-locked state, the electronic device may collect a voice signal of the user. The voice signal includes a wake-up word, the wake-up word corresponds to a voice instruction, and the voice instruction is used to request the electronic device to perform an operation corresponding to the voice instruction. When detecting the wake-up word from the voice signal, the electronic device triggers starting of the voice recognition application, and triggers authentication on the user. After the authentication succeeds, the voice recognition application of the electronic device performs the operation corresponding to the voice instruction. For example, the wake-up word corresponding to the voice instruction may be "Open a payment interface of WeChat" in the embodiment shown in FIG. 12A, FIG. 13A, or FIG. 14A. In this way, the electronic device may trigger screen unlock only when the user speaks the wake-up word corresponding to the voice instruction, and execute the voice instruction after the screen is unlocked. This simplifies voice control operations and implements instant access. For more details, refer to the foregoing embodiments. Details are not described herein again.

According to the voice control method provided in the embodiments of this application, when the electronic device is in the screen-locked state, in response to a received user operation, the electronic device can perform identity authentication on the user, and trigger the voice recognition application to detect the voice instruction entered by the user. After the electronic device unlocks the screen and the voice recognition application detects the voice instruction, the electronic device can securely execute the detected voice instruction. In this way, when the electronic device is in the screen-locked state, by using an operation, the user may trigger, authentication unlock and trigger the voice recognition application to detect the voice instruction, and perform an operation corresponding to the voice instruction after the unlock succeeds and the voice instruction is detected. This simplifies operation steps for voice control over the electronic device by the user, and reduces operation time of the user.

FIG. 16 is a schematic diagram of an architecture of an electronic device according to this application. As shown in FIG. 16, an electronic device 1600 includes an unlock operation detection module 1601, an unlocking module 1602, a voice instruction recognition module 1603, and a voice instruction execution module 1604.

The unlock operation detection module 1601 may be configured to detect an operation performed by a user to trigger authentication unlock (such as face authentication unlock, fingerprint authentication unlock, and password authentication unlock). For example, the operation used to trigger the authentication unlock may be the lifting operation in the embodiment shown in FIG. 3B, or the pressing operation on the power button 501 in the embodiment shown in FIG. 5A, or the sliding operation on the unlock triggering area 711 in the embodiment shown in FIG. 7B. The unlocking module 1602 may be configured to perform the authentication unlock on the user in response to the operation performed by the user to trigger the authentication unlock. For example, the authentication unlock includes the face authentication unlock, the fingerprint authentication unlock, and the password authentication unlock. The voice instruction recognition module 1603 may be configured to: in response to the operation performed by the user to trigger the authentication unlock, detect a voice instruction entered by the user. The voice instruction execution module 1604 may be configured to: when the unlock succeeds and the voice instruction is detected, perform an operation corresponding to the voice instruction. For example, the operation corresponding to the voice instruction may be displaying the payment interface of WeChat in the embodiment shown in FIG. 3D, FIG. 4C, FIG. 5D, FIG. 6C, FIG. 7E, or FIG. 8C.

For a part not described in detail in the embodiments of this application, refer to other embodiments. Details are not described herein again.

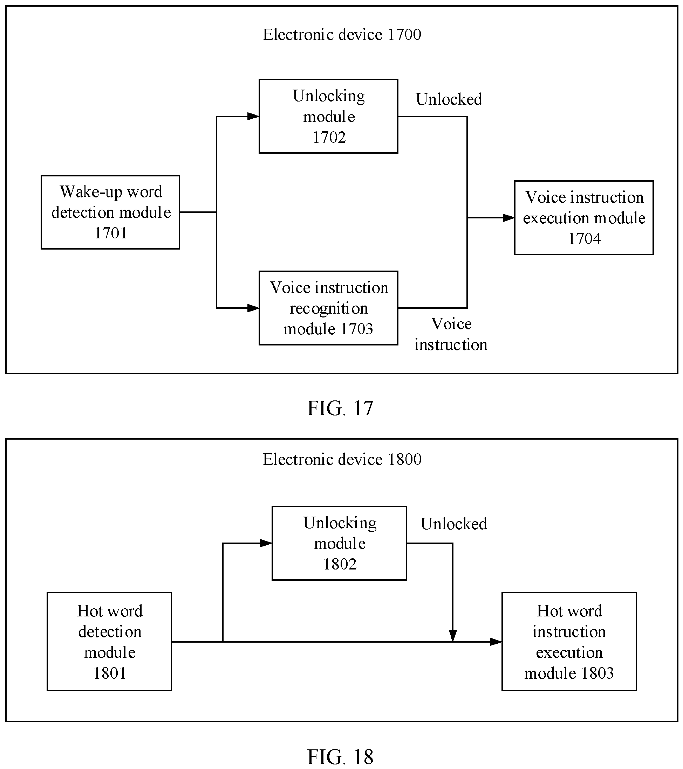

FIG. 17 is a schematic diagram of an architecture of an electronic device according to this application. As shown in FIG. 17, an electronic device 1700 includes a wake-up word detection module 1701, an unlocking module 1702, a voice instruction recognition module 1703, and a voice instruction execution module 1704.

The wake-up word detection module 1701 may be configured to detect a wake-up word entered by a user. For example, the wake-up word of the user may be "Xiaoyi Xiaoyi" in the embodiment shown in FIG. 9A, FIG. 10A, or FIG. 11A. The unlocking module 1702 may be configured to perform authentication unlock on the user when the wake-up word detection module 1701 detects the wake-up word entered by the user. For example, the authentication unlock includes the face authentication unlock, the fingerprint authentication unlock, and the password authentication unlock. The voice instruction recognition module 1703 may be configured to: when the wake-up word detection module 1701 detects the wake-up word entered by the user, detect a voice instruction entered by the user. The voice instruction execution module 1704 may be configured to: when the unlock succeeds and the voice instruction is detected, perform an operation corresponding to the voice instruction. For example, the operation corresponding to the voice instruction may be displaying the payment interface of WeChat in the embodiment shown in FIG. 9D, FIG. 10D, or FIG. 11D.

For a part not described in detail in the embodiments of this application, refer to other embodiments. Details are not described herein again.

FIG. 18 is a schematic diagram of an architecture of an electronic device according to this application. As shown in FIG. 18, an electronic device 1800 includes a voice hot word detection module 1801, an unlocking module 1802, and a hot word instruction execution module 1803.

The voice hot word detection module 1801 may be configured to detect a voice hot word (namely, a wake-up word) entered by a user, where the voice hot word corresponds to a voice instruction. The voice hot word may be "Open a payment interface of WeChat" in the embodiment shown in FIG. 12A, FIG. 13A, or FIG. 14A, or the like. The unlocking module 1802 may be configured to: when the voice hot word detection module 1801 detects the voice hot word entered by the user, perform authentication unlock on the user. For example, the authentication unlock includes the face authentication unlock, the fingerprint authentication unlock, and the password authentication unlock. The hot word instruction execution module 1803 is configured to: when the unlock succeeds, execute the voice instruction corresponding to the voice hot word. For example, an operation corresponding to the voice instruction may be displaying the payment interface of WeChat shown in FIG. 12D, FIG. 13C, or FIG. 14D.

For a part not described in detail in the embodiments of this application, refer to other embodiments. Details are not described herein again.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A voice control method, comprising:
when an electronic device is in a screen-locked state, detecting, by the electronic device, a first operation;
triggering, by the electronic device, authentication on a user, and triggering a voice recognition application to detect a voice instruction, in response to the first operation; and
unlocking, by the electronic device, a screen and performing an operation corresponding to the voice instruction, when the voice recognition application of the electronic device detects the voice instruction and the authentication succeeds.

2. The method according to claim 1, wherein the triggering, by the electronic device, authentication on a user, and triggering a voice recognition application to detect a voice instruction, in response to the first operation specifically comprises:
in response to the first operation, simultaneously triggering, by the electronic device, the authentication on the user and triggering the voice recognition application to detect the voice instruction.

3. The method according to claim 1, wherein the triggering, by the electronic device, authentication on a user, and triggering a voice recognition application to detect a voice instruction, in response to the first operation specifically comprises:
in response to the first operation, triggering, by the electronic device, the authentication on the user; and
when detecting that the authentication on the user is triggered, triggering, by the electronic device, the voice recognition application to detect the voice instruction.

4. The method according to claim 1, wherein the triggering, by the electronic device, authentication on a user, and triggering a voice recognition application to detect a voice instruction, in response to the first operation specifically comprises:
in response to the first operation, triggering, by the electronic device, the authentication on the user; and
when the authentication succeeds, triggering, by the electronic device, the voice recognition application to detect the voice instruction; and
the unlocking, by the electronic device, a screen and performing an operation corresponding to the voice instruction, when the voice recognition application of the electronic device detects the voice instruction and the authentication succeeds specifically comprises:
when the authentication succeeds, unlocking, by the electronic device, the screen; and
after the electronic device unlocks the screen, when the voice recognition application detects the voice instruction, performing, by the electronic device, the operation corresponding to the voice instruction.

5. The method according to claim 1, wherein the method further comprises:
when no voice instruction is detected within specified time after the electronic device triggers the voice recognition application to detect the voice instruction, closing, by the electronic device, the voice recognition application.

6. The method according to claim 1, wherein the method further comprises:
when the electronic device fails in the authentication on the user, outputting, by the electronic device, a first prompt, to prompt the user to trigger the electronic device to perform authentication on the user again.

7. The method according to claim 1, wherein the first operation comprises a lifting operation;
the triggering, by the electronic device, authentication on a user specifically comprises: triggering, by the electronic device, face authentication on the user; and
the triggering, by the electronic device, authentication on a user, and triggering a voice recognition application to detect a voice instruction, in response to the first operation specifically comprises:
in response to the lifting operation, triggering, by the electronic device, the face authentication on the user, and triggering the voice recognition application to detect the voice instruction.

8. The method according to claim 1, wherein the first operation comprises an operation used to trigger displaying of a fingerprint recognition icon; and
the triggering, by the electronic device, authentication on a user specifically comprises: triggering, by the electronic device, fingerprint authentication on the user; and
the triggering, by the electronic device, authentication on a user, and triggering a voice recognition application to detect a voice instruction, in response to the first operation specifically comprises:
in response to the operation used to trigger displaying of a fingerprint recognition icon, triggering, by the electronic device, the fingerprint authentication on the user, and triggering the voice recognition application to detect the voice instruction.

9. The method according to claim 1, wherein the first operation comprises an operation used to trigger displaying of a password unlock interface;
the triggering, by the electronic device, authentication on a user specifically comprises: triggering, by the electronic device, password authentication on the user; and
the triggering, by the electronic device, authentication on a user, and triggering a voice recognition application to detect a voice instruction, in response to the first operation specifically comprises:
in response to the operation used to trigger displaying of a password unlock interface, triggering, by the electronic device, the password authentication on the user, and triggering the voice recognition application to detect the voice instruction.

10. The method according to claim 1, wherein the first operation comprises a wake-up voice comprising a preset wake-up word; and
the triggering, by the electronic device, authentication on a user, and triggering a voice recognition application to detect a voice instruction, in response to the first operation specifically comprises:
in response to detecting the wake-up voice comprising the preset wake-up word, triggering, by the electronic device, the authentication on the user, and triggering the voice recognition application to detect the voice instruction.

11. The method according to claim 10, wherein the triggering, by the electronic device, the authentication on the user specifically comprises:
triggering, by the electronic device, face authentication on the user; and/or
triggering, by the electronic device, fingerprint authentication on the user; and/or
triggering, by the electronic device, password authentication on the user.

12. A voice control method, comprising:
when an electronic device is in a screen-locked state, collecting, by the electronic device, a voice signal of a user, wherein the voice signal comprises a wake-up word, the wake-up word corresponds to a voice instruction, and the voice instruction is used to request the electronic device to perform an operation corresponding to the voice instruction;
when detecting the wake-up word from the voice signal, triggering, by the electronic device, starting of a voice recognition application, and triggering authentication on the user; and
after the authentication on the user succeeds, performing, by the voice recognition application of the electronic device, the operation corresponding to the voice instruction.

13. The method according to claim 12, wherein the method further comprises:
when the electronic device fails in the authentication, outputting, by the electronic device, a first prompt, to prompt the user to trigger the electronic device to perform authentication on the user again.

14. The method according to claim 12, wherein the triggering, by the electronic device, authentication on the user specifically comprises:
triggering, by the electronic device, face authentication on the user; and/or
triggering, by the electronic device, fingerprint authentication on the user; and/or
triggering, by the electronic device, password authentication on the user.

15. An electronic device, comprising a memory and at least one processor, wherein the memory is coupled to the one or more processors, the memory is configured to store computer program code, the computer program code comprises computer instructions, and when the one or more processors execute the computer instructions, the electronic device is enabled to perform the method according to any one of claims 1 to 14.

16. A computer storage medium, comprising computer instructions, wherein when the computer instructions are run on an electronic device, the electronic device is enabled to perform the method according to any one of claims 1 to 14.

17. A computer program product, wherein when the computer program product is run on an electronic device, the electronic device is enabled to perform the method according to any one of claims 1 to 14.
